# EUROPÄISCHE PATENTSCHRIFT

(11) **EP 3 655 289 B1**
(45) Veröffentlichungstag und Bekanntmachung des Hinweises auf die Patenterteilung: **29.04.2026**
(21) Anmeldenummer: 18726953.5
(22) Anmeldetag: 17.05.2018
(51) Int. Cl.: B60Q 1/32, B60Q 3/64, B60Q 3/217, B60Q 3/14, F21S 43/239, F21S 43/245, F21S 43/247, F21S 43/20, F21S 43/14, F21S 43/50, F21S 43/241, F21S 43/31, F21Y 115/10

(54) **BAUTEIL FÜR EIN FAHRZEUG**
COMPONENT FOR A VEHICLE
COMPOSANT POUR VÉHICULE

(30) Priorität: 21.07.2017 EP 17182616
(43) Veröffentlichungstag der Anmeldung: 27.05.2020
(73) Patentinhaber: Weidplas GmbH, 8700 Küsnacht (CH)
(72) Erfinder: KINDL, Christoph, 66386 St. Ingbert (DE); ZWEIFEL, Peter, 8700 Küsnacht (CH); REUTER, Steffen, 8713 Uerikon (CH); FRIJTERS, Jan-Eric, 8843 Oberiberg (CH); QUIEN, Norbert, 66386 St. Ingbert (DE)
(74) Vertreter: Rutz, Andrea
(86) Internationale Anmeldenummer: PCT/EP2018/062870
(87) Internationale Veröffentlichungsnummer: WO 2019/015829

(56) Entgegenhaltungen:
- EP-A1- 2 317 214
- EP-A1- 2 530 372
- EP-A1- 2 660 803
- EP-A2- 2 363 738
- EP-A2- 2 524 841
- EP-B1- 2 524 841
- WO-A1-2010/118795
- DE-U1- 202004 008 681
- DE-U1- 202014 100 942
- KR-A- 20140 078 371
- US-A1- 2012 224 382
- US-A1- 2013 264 590
- US-A1- 2014 036 522

## Beschreibung

### TECHNISCHES GEBIET

Die vorliegende Erfindung betrifft ein Bauteil für ein Fahrzeug, insbesondere ein beleuchtbares Bauteil, nach dem Oberbegriff von Anspruch 1.

### STAND DER TECHNIK

In Fahrzeugen und insbesondere Kraftfahrzeugen, wie zum Beispiel Autos oder Flugzeugen, sind unterschiedlichste beleuchtbare Bauteile vorgesehen. So können beleuchtbare Bauteile zu Dekorationszwecken vorgesehen sein, welche die Oberfläche von Gegenständen dekorieren sowie originell, individuell und gegebenenfalls verkaufsfördernd gestalten. Die Beleuchtung kann zum Beispiel zur optischen Aufwertung des Fahrzeugs dienen. Die Bauteile können jedoch auch beleuchtbar ausgebildet sein, um die optische Wahrnehmung der Bauteile insbesondere in der Nacht zu verbessern. Beleuchtbare Bauteile sind beispielsweise im Bereich der Türen und des Kofferraumdeckels vorgesehen, um die Höhe einer Fussleiste zu kennzeichnen und/oder eine Markenbezeichnung darzustellen. Beleuchtbare Bauteile können jedoch auch in Form von Bedienelementen, wie beispielsweise Tasten, vorgesehen sein, um die Sichtbarkeit der Tasten zu verbessern.

So ist aus der US 2015/0307033 A1 ein Zierteil für ein Kraftfahrzeug bekannt, welches ein polymeres Substrat, eine über dem Substrat angeordnete dekorative Schicht, sowie eine diese dekorative Schicht schützende Schutzschicht umfasst. Bei der Schutzschicht handelt es sich um eine transparente oder transluzente Schicht mit einer Oberflächenveredlung. Die Oberflächenveredlung bewirkt, dass durch die Schutzschicht hindurchtretendes Licht diffus ausgestrahlt wird.

Weiter ist aus der EP 2 853 806 A1 ein Bauteil mit einem Lichtleiter bekannt, welcher über Lichtumlenkelemente verfügt. Licht einer Leuchtquelle wird im Lichtleiter von den Lichtumlenkelementen umgelenkt sowie aus dem Lichtleiter ausgekoppelt. Die Lichtumlenkelemente sind dabei derart ausgebildet und angeordnet, dass diese in einem unbeleuchteten Zustand des Lichtleiters von einem menschlichen Auge kaum sichtbar sind.

Diffus streuende Lichtumlenkelemente haben den Nachteil, dass diese das Licht innerhalb des Lichtleiters nur schlecht weiterleiten und deshalb in der Regel eine Vielzahl von Leuchtquellen zur Beleuchtung des Bauteils eingesetzt werden muss. Zudem führen solche diffus streuende Lichtumlenkelemente zu einem trüben, milchigen Erscheinungsbild des Bauteils im unbeleuchteten Zustand, was oftmals aus gestalterischen Gründen nicht erwünscht ist.

Beispielsweise wird in der EP 1 327 558 A2 eine Fahrzeugleuchte offenbart, welche über mehrere Leuchtdioden verfügt, die jeweils einem prismatischen Element zugeordnet sind. Die prismatischen Elemente strahlen das Licht der Leuchtdioden in die unterschiedlichsten Richtungen ab.

Das Vorsehen von vielen Leuchtquellen in einem Bauteil hat jedoch den Nachteil, dass die Herstellung eines solchen Bauteils mit einem grossen Aufwand und insbesondere auch mit hohen Kosten verbunden ist.

In den Dokumenten EP 2 317 214 A1 und EP 2 530 372 A1 wird jeweils ein Bauteil mit einem als Ganzes einstückig ausgebildeten Lichtleiter offenbart, der eine Aussparung aufweist. Die Aussparung bildet einen Zwischenraum, durch welchen das in den Lichtleiter eingekoppelte Licht hindurchtritt und dadurch zur Lichtlenkung dient.

Die US 2014/0036522 A1 und die US 2013/0264590 A1 offenbaren jeweils eine Fahrzeuglampe, bei der das in einen Lichtleiter eingestrahlte Licht mittels reflektierenden Elementen zu Diffusorelementen hin umgelenkt wird, die an einem zweiten, beabstandet angeordneten Lichtleiter ausgebildet sind.

### DARSTELLUNG DER ERFINDUNG

Es ist daher eine Aufgabe der vorliegenden Erfindung, ein beleuchtbares Bauteil für ein Fahrzeug anzugeben, welches bei einem einfachen Aufbau über eine gute Beleuchtung verfügt.

Diese Aufgabe wird von einem Bauteil gemäss Anspruch 1 gelöst. So wird ein Bauteil für ein Fahrzeug mit einer Sichtseite angegeben, welches einen ersten Lichtleiter und mehrere Diffusorelemente aufweist. Der erste Lichtleiter weist eine Lichteinkoppelfläche und mehrere erste Lichtumlenkelemente auf, wobei Licht durch die Lichteinkoppelfläche in den ersten Lichtleiter einkoppelbar ist. Die mehreren Diffusorelemente, welche bevorzugt ausserhalb des ersten Lichtleiters angeordnet sind, sind dazu ausgebildet, Licht diffus zu streuen. Die ersten Lichtumlenkelemente sind jeweils dazu ausgebildet, das in den ersten Lichtleiter eingekoppelte Licht um einen Umlenkwinkel gerichtet in Richtung der Diffusorelemente umzulenken, so dass die Diffusorelemente dieses gerichtete Licht diffus in Richtung der Sichtseite des Bauteils streuen.

Das durch die Lichteinkoppelfläche eingekoppelte Licht wird somit innerhalb des ersten Lichtleiters zu den mehreren ersten Lichtumlenkelementen geleitet, von welchen es dann in Richtung der Diffusorelemente umgelenkt wird. Das von den ersten Lichtumlenkelementen umgelenkte Licht wird dann von den Diffusorelementen diffus in Richtung der Sichtseite des Bauteils gestreut. Aufgrund der ersten Lichtumlenkelemente ist die Verwendung von nur wenigen Leuchtquellen möglich, welche zudem in einer beliebigen Anordnung relativ zum ersten Lichtleiter positioniert werden können. Die Diffusorelemente bewirken bevorzugt eine gleichmässige Ausleuchtung der gewünschten Bereiche der Sichtseite des Bauteils.

Bevorzugt wird der erste Lichtleiter insgesamt einstückig und insbesondere bevorzugt im Spritzgussverfahren hergestellt. In gewissen Ausführungsformen kann er jedoch auch mehrstückig ausgebildet sein.

Die ersten Lichtumlenkelemente weisen bevorzugt jeweils mindestens eine ebene Auftrittsfläche auf, welche sich geneigt zu einer Hauptfortpflanzungsrichtung des in den Lichtleiter eingekoppelten Lichts erstreckt, und auf welche das in den ersten Lichtleiter eingekoppelte Licht auftrifft. Bevorzugt ist diese Auftrittsfläche jeweils viereckig ausgestaltet. Je nach Neigung der Auftrittsfläche wird das Licht an der Auftrittsfläche um einen bestimmten Umlenkwinkel umgelenkt. Dieser Umlenkwinkel beziehungsweise die Neigung der Auftrittsfläche wird vorzugsweise so gewählt, dass das umgelenkte Licht bevorzugt direkt auf die Diffusorelemente auftrifft. Die Umlenkung des Lichts an den ersten Lichtumlenkelementen basiert physikalisch bevorzugt auf unterschiedlichen Brechungsindizes der Materialien im Bereich der ersten Lichtumlenkelemente, insbesondere das Material des ersten Lichtleiters einerseits sowie Luft oder ein anderes gasförmiges Material andererseits.

Vorzugsweise weisen die ersten Lichtumlenkelemente jeweils eine dreidimensionale Struktur auf, welche ausschliesslich durch mehrere ebene Flächen gebildet wird. Bevorzugt sind zwei dieser Flächen einander gegenüberliegend angeordnet und trapezförmig ausgestaltet. Ausserdem sind bevorzugt zwei der Flächen, welche einander gegenüberliegend angeordnet sind, sich aber geneigt zueinander erstrecken, rechteckig ausgestaltet. Zumindest eine oder genau eine der genannten Flächen bildet jeweils die Auftrittsfläche des jeweiligen ersten Lichtumlenkelements für das Licht. Es sind in Bezug auf die ersten Lichtumlenkelemente allerdings beliebige Strukturen möglich, solange diese Strukturen jeweils zum Umlenken des Lichts in Richtung der Diffusorelemente geeignet sind.

Bei den Diffusorelementen handelt es sich vorteilhaft um Strukturen, welche jeweils mehrere ebene oder gekrümmte Streuflächen aufweisen, so dass einfallendes Licht an diesen Streuflächen gestreut wird. Die Streuung des Lichts an den Streuflächen basiert physikalisch bevorzugt auf den unterschiedlichen Brechungsindizes der Materialien im Bereich der Diffusorelemente. Vorteilhaft bilden die Diffusorelemente jeweils Grenzflächen zwischen zwei unterschiedlichen Materialen, wodurch entsprechend die erwähnten unterschiedlichen Brechungsindizes hervorgerufen werden. Bevorzugt handelt es sich bei zumindest einem dieser Materialien um Luft oder einem anderen gasförmigen Material.

Die Diffusorelemente können insbesondere als Polyeder mit vorzugsweise vier oder mehr Streuflächen ausgebildet sein. Vorzugsweise sind die Diffusorelemente jeweils als ein Pyramidenstupf ausgebildet, dessen Mantelfläche vorteilhaft aus mindestens sechs, noch vorteilhafter aus mindestens acht Seitenflächen gebildet wird. Es ist jedoch auch möglich, die Diffusorelemente mit einer oder mehreren gekrümmten Flächen vorzusehen, um das Licht an den gekrümmten Flächen diffus zu streuen. Die Diffusorelemente können insbesondere jeweils auch halbkugelförmig ausgebildet sein.

Aufgrund der spezifischen Ausgestaltung und Anordnung der ersten Lichtumlenkelemente wird somit eine präzise und genau definierte Lichtumlenkung in Richtung der Diffusorelemente bewirkt. Das in den ersten Lichtleiter eingekoppelte Licht kann sich mittels der ersten Lichtumlenkelemente gezielt durch den ersten Lichtleiter fortpflanzen, so dass ein überwiegender Grossteil des eingekoppelten Lichts zu den Diffusorelementen gelangen und zur Ausleuchtung des Bauteils verwendet werden kann. Der Lichtverlust im Bauteil kann dadurch minimiert werden. Ausserdem entfällt dadurch die Notwendigkeit, eine Vielzahl von Leuchtquellen für das Ausleuchten des Bauteils vorzusehen. Weiterhin ermöglicht diese spezifische Ausgestaltung und Anordnung der ersten Lichtumlenkelemente eine asymmetrische Lichteinkopplung, wobei nur eine geringe Anzahl von Lichtquellen auf einer Seite notwendig sind.

Die ersten Lichtumlenkelemente sind bevorzugt derart in einer oder mehreren ersten Lichtumlenkgruppen angeordnet, dass die ersten Lichtumlenkelemente das in den ersten Lichtleiter eingekoppelte Licht innerhalb jeder der ersten Lichtumlenkgruppen jeweils um denselben Umlenkwinkel gerichtet umlenken.

Alle ersten Lichtumlenkelemente einer gemeinsamen ersten Lichtumlenkgruppe können jeweils in einer gemeinsamen Ebene angeordnet sein, welche sich insbesondere im Wesentlichen parallel bezüglich einer Hauptfortpflanzungsrichtung des eingekoppelten Lichts im ersten Lichtleiter erstreckt.

Mehrere erste Lichtumlenkgruppen können vorhanden sein, wobei die ersten Lichtumlenkelemente von unterschiedlichen ersten Lichtumlenkgruppen das in den ersten Lichtleiter eingekoppelte Licht um jeweils unterschiedliche Umlenkwinkel gerichtet umlenken. Bevorzugt sind die mehreren ersten Lichtumlenkgruppen alle in derselben gemeinsamen Ebene angeordnet.

Die Diffusorelemente können in einer oder mehreren Diffusorelementgruppen angeordnet sein, wobei insbesondere alle Diffusorelemente einer gemeinsamen Diffusorelementgruppe jeweils in einer gemeinsamen Ebene angeordnet sind.

Gemäss einer Weiterbildung der Erfindung ist jeder der Diffusorelementgruppen jeweils eine der ersten Lichtumlenkgruppen zugeordnet, so dass das in den ersten Lichtleiter eingekoppelte Licht von jeder der ersten Lichtumlenkgruppen jeweils in Richtung von einer der Diffusorelementgruppen umgelenkt wird.

Dieses Zusammenspiel oder Zusammenwirken der ersten Lichtumlenkelemente mit ihren vorteilhaft jeweils zugeordneten Diffusorelementen trägt ebenfalls dazu bei, dass sich das Licht gezielt und kontrolliert durch das Bauteil fortpflanzt.

Wenn mehrere Diffusorelementgruppen mit jeweils in einer gemeinsamen Ebene angeordneten Diffusorelementen vorhanden sind, können sich die unterschiedlichen Diffusorelementgruppen jeweils in zueinander geneigten Ebenen erstrecken.

Indem die Diffusorelemente beziehungsweise die Diffusorelementgruppen in zueinander geneigten Ebenen vorgesehen werden, kann das Bauteil zumindest im Bereich dieser Elemente bzw. Gruppen mit einer Krümmung ausgebildet werden. Oder anders gesagt ermöglicht es diese Anordnung, eine gekrümmte Oberfläche des Bauteils auszuleuchten. Mit Hilfe dieser Anordnung kann somit mit wenigen, bevorzugt sogar mit nur einer einzelnen Leuchtquelle eine gekrümmte Oberfläche des Bauteils gleichmässig ausgeleuchtet werden. Insbesondere kann durch diese Anordnung die Sichtseite des Bauteils gleichmässig ausgeleuchtet werden, falls die Sichtseite des Bauteils insgesamt gekrümmt ausgebildet ist.

Gemäss einer Weiterbildung der Erfindung kann der erste Lichtleiter ausserdem mehrere zweite Lichtumlenkelemente aufweisen, welche jeweils dazu ausgebildet sind, das in den ersten Lichtleiter eingekoppelte Licht in Richtung der ersten Lichtumlenkelemente gerichtet umzulenken. Ein in den ersten Lichtleiter eingekoppelter Lichtstrahl wird dann somit auf seinem Weg zu den Diffusorelementen aufgrund der ersten und der zweiten Lichtumlenkelemente zweifach umgelenkt. Dadurch können insgesamt grosse Umlenkwinkel, insbesondere von mehr als 90°, erzielt werden.

Analog zu den ersten Lichtumlenkelementen weisen auch die zweiten Lichtumlenkelemente bevorzugt jeweils mindestens eine ebene Fläche auf, welche sich geneigt zur Hauptfortpflanzungsrichtung des in den ersten Lichtleiter eingekoppelten Lichts erstreckt, und auf welche das in den ersten Lichtleiter eingekoppelte Licht auftrifft. Je nach Neigung dieser Fläche wird das Licht an dieser Fläche in einem bestimmten Umlenkwinkel umgelenkt. Dieser Umlenkwinkel beziehungsweise die Neigung der Fläche wird vorzugsweise so gewählt, dass das von den zweiten Lichtumlenkelementen umgelenkte Licht auf zumindest gewisse der ersten Lichtumlenkelemente gerichtet auftrifft.

Die zweiten Lichtumlenkelemente können insbesondere derart in einer oder mehreren zweiten Lichtumlenkgruppen angeordnet sein, dass die zweiten Lichtumlenkelemente das in den ersten Lichtleiter eingekoppelte Licht innerhalb jeder der zweiten Lichtumlenkgruppen jeweils um denselben Umlenkwinkel gerichtet umlenken.

Alle zweiten Lichtumlenkelemente einer gemeinsamen zweiten Lichtumlenkgruppe sind bevorzugt jeweils in einer gemeinsamen Ebene angeordnet, welche sich insbesondere im Wesentlichen parallel bezüglich einer Hauptfortpflanzungsrichtung des eingekoppelten Lichts im ersten Lichtleiter erstreckt.

Mehrere zweite Lichtumlenkgruppen können vorhanden sein, wobei die zweiten Lichtumlenkelemente von unterschiedlichen zweiten Lichtumlenkgruppen das in den ersten Lichtleiter eingekoppelte Licht um jeweils unterschiedliche Umlenkwinkel gerichtet umlenken.

Jeder der ersten Lichtumlenkgruppen kann jeweils eine der zweiten Lichtumlenkgruppen zugeordnet sein, so dass das in den ersten Lichtleiter eingekoppelte Licht von jeder der zweiten Lichtumlenkgruppen jeweils in Richtung von einer der ersten Lichtumlenkgruppen umgelenkt wird. Bei einer derartigen Zuordnung der ersten und der zweiten Lichtumlenkgruppen ist bevorzugt jeder der zweiten Lichtumlenkgruppen jeweils eine Diffusorelementgruppe zugeordnet, so dass das eingekoppelte Licht von jeder der zweiten Lichtumlenkgruppen jeweils via eine der ersten Lichtumlenkgruppen zu einer der Diffusorelementgruppen gelangt. Es findet somit eine zweifache Umlenkung statt.

Das Bauteil umfasst ausserdem einen zweiten Lichtleiter, welcher die Diffusorelemente aufweist. Der zweite Lichtleiter ist beabstandet zum ersten Lichtleiter angeordnet.

Bevorzugt sind die ersten und zweiten Lichtumlenkelemente im ersten Lichtleiter angeordnet und die Diffusorelemente im zweiten Lichtleiter. Der zweite Lichtleiter kann einstückig oder mehrstückig ausgebildet sein. Ein mehrstückig ausgebildeter zweiter Lichtleiter ist insbesondere dann von Vorteil, wenn eine gekrümmte Oberfläche des Bauteils ausgeleuchtet werden soll. In diesem Fall können die einzelnen Abschnitte oder Segmente des zweiten Lichtleiters derart geneigt zueinander angeordnet werden, so dass diese der Krümmung der zu beleuchtenden Oberfläche folgen. Ein mehrstückig ausgebildeter zweiter Lichtleiter kann somit flexibel an eine zu beleuchtende Oberfläche angepasst werden und ermöglicht folglich eine vollständige Ausleuchtung von Bauteilen mit den unterschiedlichsten Geometrien. Insbesondere ermöglicht eine solche Ausleuchtung, dass das beleuchtete Bauteil aus allen Raumrichtungen oberhalb der Sichtseite des Bauteils gut gesehen werden kann. Ein einstückig ausgebildeter zweiter Lichtleiter kann beispielsweise als flexible Folie ausgebildet sein oder aus einem Material hergestellt sein, welches dem zweiten Lichtleiter Flexibilität verleiht. Dieses Material ist beispielsweise eine Elastomer wie beispielsweise Silikonkautschuk. Mittels solcher flexiblen, einstückig ausgebildeten zweiten Lichtleiter kann das Bauteil einfach hergestellt sowie können insbesondere gekrümmte Oberflächen des Bauteils, wie insbesondere die Sichtseite des Bauteils, optimal ausgeleuchtet werden.

Andererseits ist es jedoch genauso möglich, die Diffusorelemente zusammen mit den ersten Lichtumlenkelementen und, falls vorhanden den zweiten Lichtumlenkelementen im ersten Lichtleiter vorzusehen. Zum Beispiel können die ersten und gegebenenfalls die zweiten Lichtumlenkelemente innerhalb des ersten Lichtleiters und/oder im Bereich einer Unterfläche des ersten Lichtleiters angeordnet sein, und die Diffusorelemente können auf einer der Unterfläche gegenüberliegenden Oberfläche des ersten Lichtleiters angeordnet sein. Solch eine Ausgestaltung verfügt im Vergleich zu einem Bauteil mit mehreren Lichtleitern über einen vereinfachten Aufbau.

Das Bauteil umfasst ausserdem eine zwischen dem ersten Lichtleiter und dem zweiten Lichtleiter angeordnete Struktur, insbesondere Tragestruktur, mit zumindest einem Kanal zur Begrenzung des gerichtet umgelenkten Lichts zwischen dem ersten Lichtleiter und dem zweiten Lichtleiter. Der zumindest eine Kanal ist von Strukturwänden seitlich begrenzt, welche lichtabsorbierend ausgebildet sind.

Vorzugsweise sind so viele Kanäle vorgesehen, wie es Diffusorelementgruppen hat.

Vorteilhalft ist jedem Paar von jeweils einer Diffusorelementgruppe und einer ersten Lichtumlenkgruppe jeweils ein Kanal zugeordnet. Falls der zweite Lichtleiter eine Krümmung oder mehrere geneigt zueinander angeordnete Segmente aufweist, so können sich die Strukturwände entsprechend dieser Krümmung bzw. entsprechend den Erstreckungsrichtungen der Segmente zwischen dem ersten Lichtleiter und dem zweiten Lichtleiter in zueinander unterschiedlich geneigte Richtungen erstrecken. Das heisst, die Strukturwände sind dann bevorzugt jeweils derart ausgebildet sowie angeordnet, dass sie die Fortpflanzung des gerichtet umgelenkten Lichts zwischen dem ersten Lichtleiter und dem zweiten Lichtleiter nicht behindern, sondern für dieses Licht eine Kanalisierung bereitstellen. Des Weiteren besteht ein Vorteil durch die Kanalisierung des Lichts darin, dass, durch die Zuordnung einer jeweiligen ersten Lichtumlenkgruppe zu einer Diffusorelementgruppe, vermieden wird, dass Fremd- oder Lecklicht in die optische Anordnung eindringen kann und somit zu unerwünschten Störlichteffekten führt.

Lichtabsorbierende Strukturwände weisen eine Beschichtung aus einem lichtabsorbierenden Material auf. Als lichtabsorbierendes Material kann zum Beispiel schwarzer Kunststoff verwendet werden. Lichtabsorbierende Strukturwände bringen den Vorteil, dass ungewollte Streustrahlung, welche sich ungerichtet durch den ersten Lichtleiter fortbewegt beziehungsweise ungerichtet in den zweiten Lichtleiter abgestrahlt wird, von den lichtabsorbierenden Strukturwänden absorbiert wird. Dadurch wird eine Ausleuchtung des Bauteils in Bereichen vermieden werden, wo dies nicht erwünscht ist.

Um eine hohe Leuchtdichte bzw. gute Ausleuchtung an der Sichtseite zu erzielen, ist eine möglichst hohe Anzahl von Lichtumlenkelementen und/oder Diffusorelementen von Vorteil. Gleichzeitig wirkt es jedoch unästhetisch, wenn diese Elemente im unbeleuchteten Zustand, also wenn kein Licht in den ersten Lichtleiter eingekoppelt wird, von einem menschlichen Auge, bevorzugt in einem üblichen Abstand von ca. 30 cm bis 70 cm von der Sichtseite des Bauteils, sichtbar sind.

Um eine hohe Leuchtdichte zu erzielen, wird die Dimensionierung und Anordnung der ersten Lichtumlenkelemente bevorzugt wie folgt gewählt: Wenn ein jeweiliges erstes Lichtumlenkelement einen Kreis als Querschnitt mit einem Mittelpunkt aufweist oder um den Querschnitt eines jeweiligen ersten Lichtumlenkelementes ein Umkreis mit einem Mittelpunkt legbar ist, weist der Mittelpunkt des Kreises bzw. des Umkreises eines jeweiligen ersten Lichtumlenkelements zum Mittelpunkt des Kreises bzw. des Umkreises sämtlicher weiteren ersten Lichtumlenkelemente bevorzugt einen Abstand auf, welcher kleiner als der Durchmesser des Kreises bzw. des Umkreises des jeweiligen ersten Lichtumlenkelements geteilt durch den Wert 0.33 ist. Bevorzugt gehören das jeweilige erste Lichtumlenkelement sowie sämtliche weiteren ersten Lichtumlenkelemente einer jeweiligen gemeinsamen ersten Lichtumlenkgruppe an, wobei bevorzugt sämtliche ersten Lichtumlenkelemente der jeweiligen gemeinsamen ersten Lichtumlenkgruppe in einer gemeinsamen Ebene angeordnet sind. Der Durchmesser des Kreises bzw. des Umkreises beträgt bevorzugt maximal 50 Mikrometer. Diese Abmessungen und eine solche Anordnung führen zu einer hohen Dichte an ersten Lichtumlenkelementen, welche somit im ersten Lichtleiter nahe beieinander angeordnet sind und zu einer effizienten Umlenkung des eingekoppelten Lichts zu den Diffusorelementen hin führen. Dieselben Beziehungen können auch auf die zweiten Lichtumlenkelemente angewendet werden, so dass auch diese in einer hohen Dichte im ersten Lichtleiter vorhanden sind.

Um allfällige Anforderungen an die Ästhetik des Bauteils im unbeleuchteten Zustand zu erfüllen, kann ein jeweiliges Diffusorelement einen Kreis als Querschnitt mit einem Mittelpunkt aufweisen oder um den Querschnitt eines jeweiligen Diffusorelementes kann ein Umkreis mit einem Mittelpunkt legbar sein, wobei der Mittelpunkt des Kreises bzw. des Umkreises eines jeweiligen Diffusorelements zum Mittelpunkt des Kreises bzw. des Umkreises sämtlicher weiteren Diffusorelemente bevorzugt einen Abstand aufweist, welcher grösser als der Durchmesser des Kreises bzw. des Umkreises des jeweiligen Diffusorelements geteilt durch den Wert 0.33 ist. Bevorzugt gehören das jeweilige Diffusorelement sowie sämtliche weiteren Diffusorelemente einer jeweiligen gemeinsamen Diffusorelementgruppe an, wobei bevorzugt sämtliche Diffusorelemente der jeweiligen gemeinsamen Diffusorelementgruppe in einer gemeinsamen Ebene angeordnet sind. Der Durchmesser des Kreises bzw. des Umkreises beträgt bevorzugt maximal 50 Mikrometer. Die Kombination von diesen Abmessungen, einer solchen Anordnung sowie der Verwendung von geometrischen Elementen (zum Beispiel Erhebungen und/oder Vertiefungen) als Diffusorelemente führen dazu, dass die Diffusorelemente im unbeleuchteten Zustand, also wenn kein Licht in den ersten Lichtleiter eingekoppelt wird, von einem menschlichen Auge kaum sichtbar sind. Insbesondere erlaubt die Kombination der Abmessungen, der Anordnung sowie der Ausbildung der Diffusorelemente als geometrischen Elemente, dass die Diffusorelemente in einem aus einem insbesondere glasklaren Material bzw. transparenten Material, wie beispielsweise einem glasklaren Kunststoff, hergestellten Lichtleiter angeordnet sein können, ohne dass dann der Lichtleiter ein trübes, milchiges Erscheinungsbild im unbeleuchteten Zustand aufweist.

Das Bauteil kann ausserdem mindestens eine Leuchtquelle, vorzugsweise genau eine Leuchtquelle, umfassen, um das Licht in den ersten Lichtleiter einzukoppeln.

Bevorzugt ist die Sichtseite des Bauteils wenigstens teilweise durch ein Dekorelement gebildet. Die Sichtseite des Bauteils kann insbesondere gekrümmt ausgebildet sein. Insbesondere kann die Sichtseite des Bauteils insgesamt gekrümmt ausgebildet sein. Genauso kann die Sichtseite des Dekorelements gekrümmt, insbesondere insgesamt gekrümmt, ausgebildet sein. Falls das Bauteil einen zweiten Lichtleiter hat, welcher die Diffusorelemente aufweist, ist das Dekorelement bevorzugt anliegend am zweiten Lichtleiter angeordnet. Das Dekorelement ist bevorzugt aus Metall, Kunststoff oder Holz hergestellt. Falls das Dekorelement opak bzw. lichtundurchlässig ausgebildet ist, so weist das Dekorelement wenigstens einen Durchbruch auf, durch welchen das Licht hindurchstrahlen kann. Falls das Dekorelement mehrere Durchbrüche aufweist, können diese entsprechend der Krümmung der Sichtseite des Dekorelements unterschiedlich zueinander geneigte Flächen definieren. Falls ein zweiter Lichtleiter vorhanden ist, welcher die Diffusorelemente aufweist, greift dieser vorteilhaft in die Durchbrüche des Dekorelements ein. Bevorzugt greift der zweite Lichtleiter derart in die Durchbrüche des Dekorelements ein, dass die Oberfläche des zweiten Lichtleiters im Bereich der Durchbrüche bündig mit der Oberfläche des Dekorelements zu liegen kommt. Schmutzablagerungen entlang der Ränder der Durchbrüche können dadurch vermieden werden.

In einer bevorzugten Ausführungsform ist das Bauteil als Zierleiste, insbesondere als Einstiegsleiste, ausgebildet. Bevorzugt ist die Zierleiste, insbesondere die Einstiegsleiste, ausgebildet zur visuellen Kommunikation mit den Fahrzeuginsassen und / oder Personen ausserhalb des Fahrzeuges wie beispielsweise zum Warnen und / oder zum Anzeigen von definierten Zuständen.

In einer anderen, ebenfalls bevorzugten Ausführungsform ist das Bauteil als Stossfänger oder als Teil eines Stossfängers ausgebildet.

In einer nochmals anderen bevorzugten Ausführungsform ist das Bauteil als Bedienelement, wie beispielsweise eine Taste, ausgebildet.

Die vorliegende Erfindung gibt zudem ein Fahrzeug, insbesondere ein Kraftfahrzeug, an, welches das erfindungsgemässe Bauteil umfasst, das wie ausgeführt ausgebildet ist.

Bevorzugt ist das Bauteil in einem Innenbereich und / oder in einem Aussenbereich des Fahrzeuges angeordnet.

Aufgrund der ersten und, falls vorhanden, zweiten Lichtumlenkelemente sowie der Diffusorelemente kann mit nur wenigen Leuchtquellen, evtl. sogar mit nur einer einzigen Leuchtquelle, eine sehr effiziente und helle Ausleuchtung des Bauteils erreicht werden. Dadurch wird der Aufbau des Bauteils vereinfacht und es können Herstellungskosten eingespart werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: schematisch einen zentralen Längsschnitt durch ein erfindungsgemässes Bauteil mit ersten und zweiten Lichtumlenkelementen in einem ersten Lichtleiter sowie mit Diffusorelementen in einem zweiten Lichtleiter;
- Fig. 2: eine Draufsicht auf das Bauteil gemäss Figur 1;
- Fig. 3: eine schematische Darstellung eines Ausschnitts des Bauteils im Bereich B von Figur 2 (Längsschnitt);
- Fig. 4: eine Draufsicht auf ein schematisch dargestelltes Diffusorelement gemäss einer ersten Ausführungsform;
- Fig. 5: eine Seitenansicht des Diffusorelements gemäss Figur 4;
- Fig. 6: eine perspektivische Ansicht eines schematisch dargestellten ersten oder zweiten Lichtumlenkelements gemäss einer ersten Ausführungsform;
- Fig. 7: eine Seitenansicht des ersten oder zweiten Lichtumlenkelements gemäss Figur 6 aus einer Blickrichtung entlang einer Hauptfortpflanzungsrichtung A;
- Fig. 8: eine perspektivische Ansicht des ersten Lichtleiters mit ersten und zweiten Lichtumlenkelementen eines schematisch dargestellten erfindungsgemässen Bauteils; sowie
- Fig. 9: einen zentralen Längsschnitt durch den ersten Lichtleiter gemäss Figur 8.

### BESCHREIBUNG BEVORZUGTER AUSFÜHRUNGSFORMEN

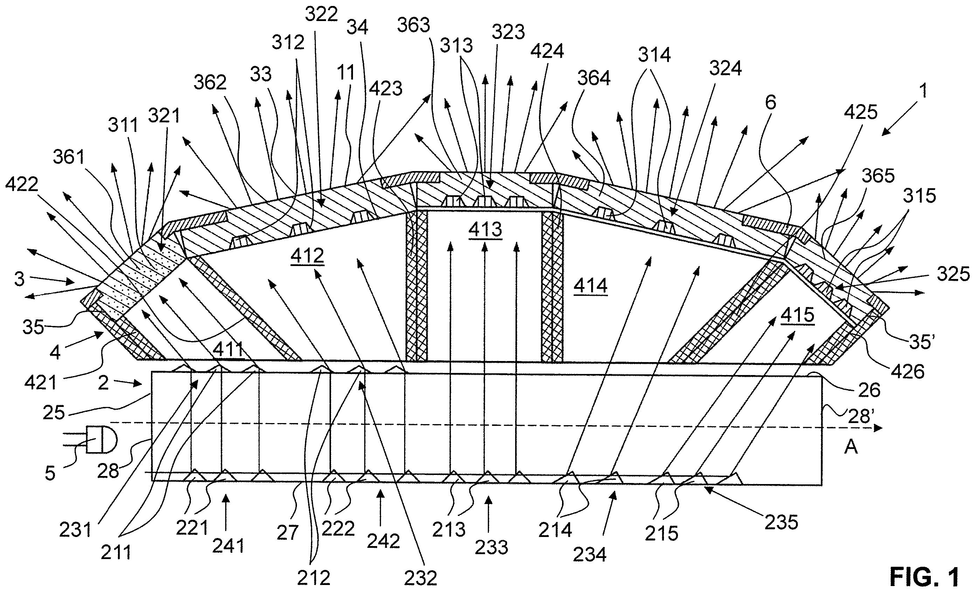

In der Figur 1 ist in einem zentralen Längsschnitt ein erfindungsgemässes Bauteil 1 dargestellt. Beim Bauteil 1 handelt es sich um ein beleuchtetes Bauteil für ein Fahrzeug, insbesondere um einen Stossfänger oder um ein Teil eines Stossfängers. In ähnlichen oder alternativen Ausführungsformen kann es sich beim Bauteil 1 aber auch um eine Fuss- oder Einstiegsleiste für ein Fahrzeug handeln. Auch die Ausbildung des Bauteils 1 als ein Bedienelement wie eine Taste eines Fahrzeuges ist möglich. Ebenfalls möglich ist beispielsweise die Ausbildung des Bauteils 1 als Zierleiste zur visuellen Kommunikation mit Fahrzeuginsassen und / oder Personen ausserhalb des Fahrzeuges, wie beispielsweise zum Warnen und / oder zum Anzeigen von definierten Zuständen.

Wie aus der Figur 1 hervorgeht, ist das Bauteil 1 mit einer Sichtseite 11 versehen und umfasst einen ersten Lichtleiter 2, einen zweiten Lichtleiter 3, eine Struktur 4, sowie eine Leuchtquelle 5, auf welche jeweils nachfolgend genauer eingegangen wird.

Beim ersten Lichtleiter 2 handelt es sich um einen im Wesentlichen quaderförmigen Körper, welcher eine Oberfläche 26, eine Unterfläche 27 sowie vier Seitenflächen (in der Figur 1 sind nur die Seitenflächen 28, 28' erkennbar) aufweist. Die Seitenfläche 28 bildet eine Lichteinkoppelfläche 25. Der erste Lichtleiter 2 ist als Ganzes einstückig aus einem transparenten oder zumindest lichtdurchlässigen Material wie Kunststoff oder Glas hergestellt. Der Kunststoff ist beispielsweise ein Thermoplast, ein Duroplast oder ein Elastomer. Das Elastomer ist beispielsweise ein Silikonkautschuk. Der erste Lichtleiter 2 weist im Bereich seiner Ober- und Unterfläche 26, 27 mehrere erste Lichtumlenkelemente 211, 212, 213, 214, 215 sowie mehrere zweite Lichtumlenkelemente 221, 222 auf.

Der zweite Lichtleiter 3 ist beabstandet zum ersten Lichtleiter 2 im Bauteil 1 angeordnet und wird von einem transparenten oder zumindest lichtdurchlässigen Material, wie insbesondere einem Kunststoff oder Glas gebildet. Im Falle von Kunststoff kann es sich dabei beispielsweise um eines oder mehrere quaderförmige Kunststoffelemente oder um eine oder mehrere Kunststofffolien handeln. Der Kunststoff ist beispielsweise ein Thermoplast, ein Duroplast oder ein Elastomer. Im Falle eines Elastomers ist beispielsweise die Verwendung von Silikonkautschuk möglich. Der zweite Lichtleiter 3 weist eine Oberseite 33, eine Unterseite 34 sowie Aussenseiten 35, 35' auf. In dem in Figur 1 gezeigten Ausführungsbeispiel ist der zweite Lichtleiter 3 mehrstückig ausgebildet und in mehrere Lichtleiterabschnitte 361, 362, 363, 364, 365 unterteilt. Die Lichtleiterabschnitte 361, 362, 363, 364, 365 sind hier geneigt zueinander angeordnet.

Der zweite Lichtleiter 3 weist Diffusorelemente 311, 312, 313, 314, 315 auf, welche dazu ausgebildet sind, Licht zur Oberseite 33 hin diffus zu streuen. Die Oberseite 33 bildet einen Teil der Sichtseite 11 des Bauteils 1.

Über die Lichteinkoppelfläche 25 ist Licht der Leuchtquelle 5 entlang einer Hauptfortpflanzungsrichtung A in den ersten Lichtleiter 2 einkoppelbar. Die ersten Lichtumlenkelemente 211, 212, 213, 214, 215 sind jeweils dazu ausgebildet, das in den ersten Lichtleiter 2 eingekoppelte Licht um einen Umlenkwinkel gerichtet in Richtung der im zweiten Lichtleiter 3 angeordneten Diffusorelemente 311, 312, 313, 314, 315 umzulenken, so dass das umgelenkte Licht direkt auf die Diffusorelemente 311, 312, 313, 314, 315 auftrifft. Die Diffusorelemente 311, 312, 313, 314, 315 streuen das Licht dann diffus in Richtung der Sichtseite 11, so dass eine gleichmässige Ausleuchtung des durch den zweiten Lichtleiter 3 gebildeten Teils der Sichtseite 11 erreicht wird.

Die zweiten Lichtumlenkelemente 221, 222 sind jeweils dazu ausgebildet, das in den ersten Lichtleiter 2 eingekoppelte Licht in Richtung der ersten Lichtumlenkelemente 211, 212 gerichtet umzulenken, so dass das umgelenkte Licht direkt auf die ersten Lichtumlenkelemente 211, 212 auftrifft. Das Vorsehen der zweiten Lichtumlenkelemente 221, 222 ist notwendig, um auch an denjenigen Stellen des Bauteils 1 eine hohe Lichtausbeute erreichen zu können, wo das in den ersten Lichtleiter 2 eingekoppelte Licht um mehr als 90° umgelenkt werden muss, um zu den entsprechenden Diffusorelementen 311, 312 zu gelangen.

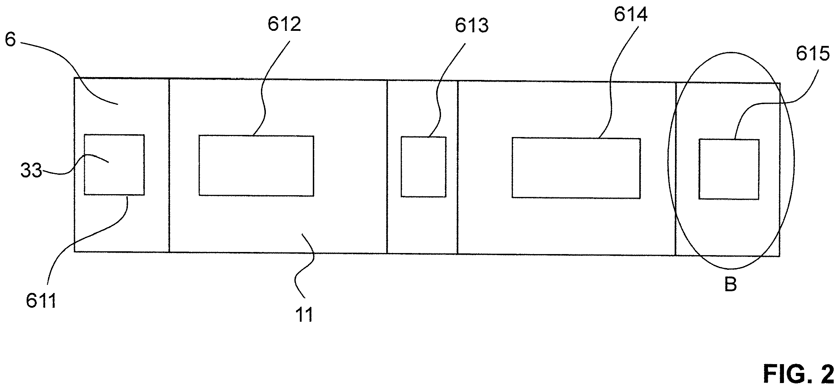

An der Oberseite 33 des zweiten Lichtleiters 3 ist ein Dekorelement 6 befestigt, welches insbesondere in der Figur 2 gut erkennbar ist. Das Dekorelement 6 ist an mehreren Stellen gekrümmt ausgebildet, um entsprechend der Ausrichtung der Lichtleiterabschnitte 361, 362, 363, 364, 365 im Wesentlichen an der gesamten Oberseite 33 des zweiten Lichtleiters 3 aufzuliegen. Das Dekorelement 6 ist hier als Ganzes einstückig aus einem opaken Material, wie beispielsweise einem Metall, Holz oder einem Kunststoff, hergestellt. Wie in Figur 1 ersichtlich, ist die Sichtseite 11 des Bauteils 1 insgesamt gekrümmt ausgebildet.

In den Bereichen, wo ein Leuchten des Bauteils 1 erwünscht ist, weist das Dekorelement 6 entsprechende Durchbrüche 611, 612, 613, 614, 615 auf, welche die Sicht auf den via den ersten Lichtleiter 2 beleuchteten zweiten Lichtleiter 3 freigeben. Der zweite Lichtleiter 3 greift jeweils derart in die Durchbrüche 611, 612, 613, 614, 615 ein, dass die Oberfläche des zweiten Lichtleiters 3 im Bereich der Durchbrüche 611, 612, 613, 614, 615 bündig mit der die Sichtseite 11 bildenden Oberfläche des Dekorelements 6 zu liegen kommt. Im Ausführungsbeispiel gemäss den Figuren 1 und 2 weist das Dekorelement 6 fünf Durchbrüche 611, 612, 613, 614, 615 auf, von denen jeweils einer in jedem der fünf Lichtleiterabschnitte 361, 362, 363, 364, 365 angeordnet ist und dort jeweils die Sicht auf die Oberseite 33 des zweiten Lichtleiters 3 freigibt. Indem nun Licht aus der Leuchtquelle 5 in den ersten Lichtleiter 2 eingekoppelt wird und via die zweiten Lichtumlenkelemente 221, 222 und die ersten Lichtumlenkelemente 211, 212, 213, 214, 215 auf die Diffusorelemente 311, 312, 313, 314, 315 des zweiten Lichtleiters 3 auftrifft, wird das Licht durch die Durchbrüche 611, 612, 613, 614, 615 hindurch diffus in die Umgebung abgestrahlt. Aufgrund der Wirkung der Diffusorelemente 311, 312, 313, 314, 315 werden die Durchbrüche 611, 612, 613, 614, 615 dabei gleichmässig ausgeleuchtet.

Im vorliegenden Ausführungsbeispiel umfasst das Bauteil 1 also genau eine Leuchtquelle 5. Aufgrund der spezifischen Ausbildung und gegenseitigen Anordnung der ersten und zweiten Lichtumlenkelemente 211, 212, 213, 214, 215 bzw. 221, 221 einerseits sowie der Diffusorelemente 311, 312, 313, 314, 315 andererseits kann dennoch eine gleichmässige und vollständige Ausleuchtung aller Durchbrüche 611, 612, 613, 614, 615 des Dekorelements 6 erreicht werden. Trotzdem ist es natürlich möglich, zwei oder mehr Leuchtquellen vorzusehen.

Bei den Diffusorelementen 311 handelt es sich beispielsweise um Partikel, Gaseinschlüsse und/oder lokale Materialveränderungen, welche im Inneren des zweiten Lichtleiters 3 angeordnet sind. Die Diffusorelemente 311 können beispielsweise mittels eines Lasers hergestellt sein. Das auf die Diffusorelemente 311 auftreffende Licht wird gestreut und in eine Vielzahl von unterschiedlichen Richtungen weitergeleitet.

Bei den Diffusorelementen 312, 313, 314, 315 handelt es sich um Strukturen, welche jeweils in Form von lokalen Vertiefungen in der Unterseite 34 des zweiten Lichtleiters 3 vorgesehen sind. Alternativ oder zusätzlich wäre es auch möglich, entsprechend ausgestaltete Diffusorelemente in Form von lokalen Erhebungen in der Oberseite 33 des zweiten Lichtleiters 3 vorzusehen. Die Lichtstreuung wird dabei durch die abrupte Veränderung des Brechungsindexes beim Übergang von Luft oder einem anderen gasförmigen Material zum Material des zweiten Lichtleiters 3 bzw. umgekehrt verursacht. Da die Diffusorelemente 312, 313, 314, 315 jeweils eine Vielzahl von ebenen und in unterschiedlichen Richtungen geneigten Begrenzungsflächen zwischen Luft (oder einem anderen gasförmigen Material) und dem Material des zweiten Lichtleiters 3 aufweisen, wird das auf die Diffusorelemente 312, 313, 314, 315 auftreffende Licht jeweils entsprechend in eine Vielzahl von unterschiedlichen Richtungen weitergeleitet und somit gestreut. Um eine noch effizientere Streuung zu erreichen, können die durch die Diffusorelemente 312, 313, 314, 315 gebildeten Begrenzungsflächen auch gekrümmt ausgestaltet sein. Die Diffusorelemente 312, 313, 314, 315 können jeweils sogar auch nur eine einzige, gekrümmte Begrenzungsfläche aufweisen, welche beispielsweise halbkugelförmig sein kann.

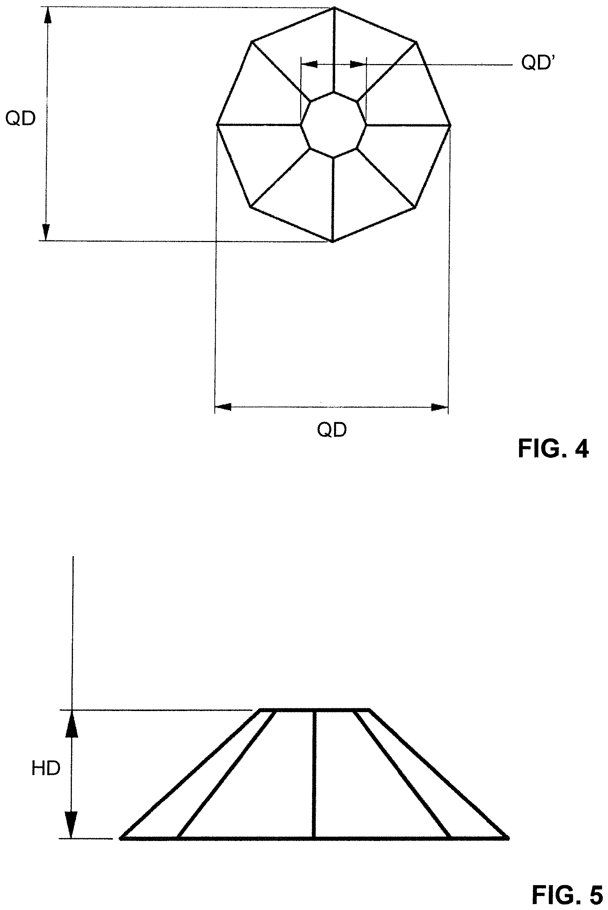

Bei dem in der Figur 1 gezeigten Ausführungsbeispiel weisen die Diffusorelemente 312, 313, 314, 315, wie es in den Figuren 4 und 5 im Detail gezeigt ist, jeweils die Form eines Pyramidenstumpfes, insbesondere eines regelmässigen und geraden Pyramidenstumpfes, auf. Der Pyramidenstumpf hat im vorliegenden Fall ein Achteck als Grundfläche und entsprechend eine Mantelfläche bestehend aus acht Seitenflächen. Selbstverständlich sind auch Ausführungsformen von Diffusorelementen möglich, welche jeweils einen Pyramidenstumpf mit weniger oder mehr als acht Seitenflächen bilden. Die Seitenflächen bilden die Begrenzungsflächen der Diffusorelemente 312, 313, 314, 315, welche die Lichtstreuung bewirken.

Die Höhe HD der Diffusorelemente 312, 313, 314, 315 beträgt vorzugsweise etwa 2 bis 5 Mikrometer. Der Maximaldurchmesser QD der Diffusorelemente 312, 313, 314, 315 im Bereich der Grundfläche des Pyramidenstumpfes beträgt bevorzugt jeweils 50 Mikrometer, bevorzugter jeweils etwa 10 Mikrometer, und der Maximaldurchmesser QD' im Bereich der sich parallel zur Grundfläche erstreckenden Deckfläche des Pyramidenstumpfes beträgt bevorzugt etwa 2.5 bis 3.5 Mikrometer.

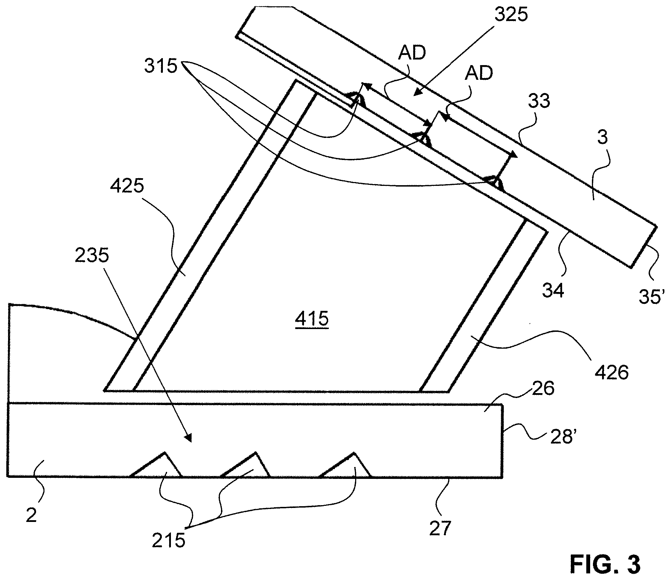

Die in der Figur 3 stellvertretend für die Diffusorelemente 315 illustrierten Abstände AD zwischen den Diffusorelementen 312, 313, 314, 315 betragen bevorzugt jeweils 30 - 40 Mikrometer.

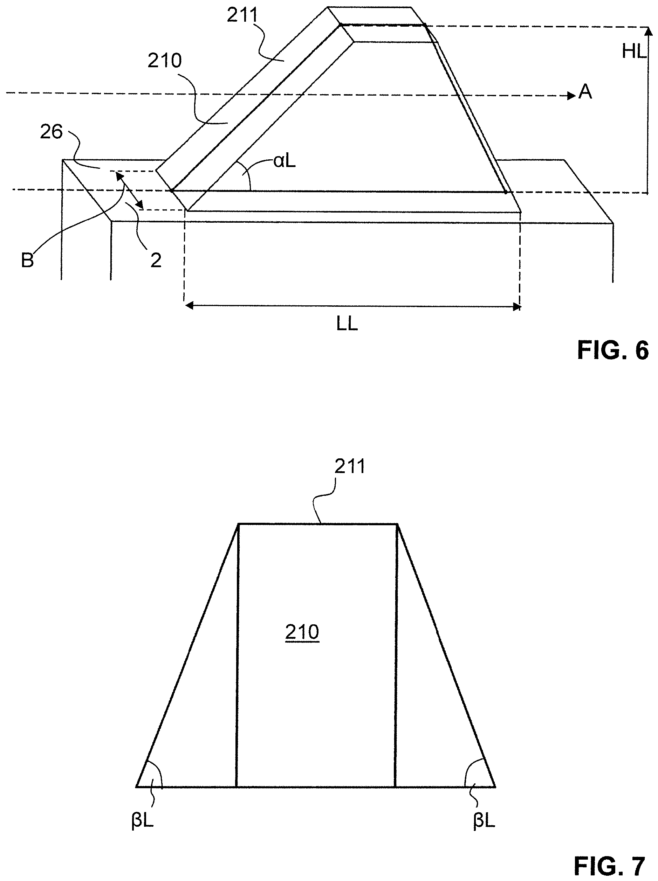

Wie im Zusammenhang mit den Figuren 6 und 7 stellvertretend anhand einem der ersten Lichtumlenkelemente 211 eingehender erläutert wird, sind die ersten Lichtumlenkelemente 211, 212, 213, 214, 215 sowie die zweiten Lichtumlenkelemente 221, 222 jeweils in Form von lokalen Erhebungen oder Vertiefungen in der Oberfläche 26 bzw. Unterfläche 27 des ersten Lichtleiters 2 ausgebildet. Grundsätzlich können sowohl die ersten als auch die zweiten Lichtumlenkelemente beliebig als Erhebungen oder Vertiefungen in der Oberfläche 26 oder als Erhebungen oder Vertiefungen in der Unterfläche 27 ausgebildet sein. Die Lichtumlenkung wird dabei durch die abrupte Veränderung des Brechungsindexes beim Übergang vom Material des ersten Lichtleiters 2 zu Luft bzw. umgekehrt im Bereich der ersten Lichtumlenkelemente 211, 212, 213, 214, 215 bzw. der zweiten Lichtumlenkelemente 221, 222 verursacht. Auch eine Ausbildung der ersten und/oder zweiten Lichtumlenkelemente im Inneren des ersten Lichtleiters 2 ist grundsätzlich möglich.

Wie in den Figuren 6 und 7 gut zu erkennen ist, weisen die ersten Lichtumlenkelemente 211, 212, 213, 214, 215 sowie die zweiten Lichtumlenkelemente 221, 222 jeweils eine ebene Auftrittsfläche 210 auf, welche mit einem Winkel αL geneigt zur Hauptfortpflanzungsrichtung A des von der Leuchtquelle 5 in den ersten Lichtleiter 2 eingekoppelten Lichts angeordnet ist. Diese ebene Auftrittsfläche 210 ist derart angeordnet, dass das in den ersten Lichtleiter 2 eingekoppelte Licht direkt, das heisst entlang der Hauptfortpflanzungsrichtung A, auf diese auftrifft und dort um einen bestimmten Umlenkwinkel in Richtung der Diffusorelemente 311, 312, 313, 314, 315 umgelenkt wird. Der Umlenkwinkel wird dabei durch die Neigung der ebenen Auftrittsfläche 210 bezüglich der Richtung, aus welcher das Licht auf die Auftrittsfläche 210 auftrifft, bestimmt. Oder anders ausgedrückt entspricht der Umlenkwinkel dem Ausfallswinkel, welcher genauso gross ist wie der Einfallswinkel, unter welchem das Licht auf die jeweilige Auftrittsfläche 210 eines ersten Lichtumlenkelements 211, 212, 213, 214, 215 bzw. eines zweiten Lichtumlenkelements 221, 222 auftrifft.

Die Höhe HL des in der Figur 6 gezeigten ersten Lichtumlenkelements 211 beträgt bei einer insbesondere bevorzugten Ausführungsform etwa 10 Mikrometer und die entlang der Hauptfortpflanzungsrichtung A gemessene Länge LL etwa 20 Mikrometer. Die bevorzugten Höhen HL der ersten bzw. zweiten Lichtumlenkelemente 211, 212, 213, 214, 215, 221, 222 liegen zwischen 5 und 50 Mikrometer, insbesondere zwischen 5 bis 25 Mikrometer, und die maximale Länge LL beträgt vorzugsweise maximal 50 Mikrometer. Bevorzugt liegt die Breite B der ersten bzw. zweiten Lichtumlenkelemente 211, 212, 213, 214, 215, 221, 222 zwischen 5 und 150 Mikrometer, bevorzugter zwischen 5 und 100 Mikrometer, noch bevorzugter zwischen 10 und 50 Mikrometer, insbesondere ca. 25 Mikrometer. Die ebene Auftrittsfläche 210 ist hier mit einem Winkel αL von etwa 45 Grad geneigt zur Hauptfortpflanzungsrichtung A angeordnet und bewirkt dadurch eine Umlenkung des auftreffenden Lichts um ca. 90°. Bevorzugte Neigungswinkel αL der ebenen Auftrittsfläche 210 liegen im Bereich zwischen 20° und 60°. Wie insbesondere aus der Figur 7 hervorgeht, weist das erste Lichtumlenkelement 211, welches wie erwähnt stellvertretend für alle ersten Lichtumlenkelemente 211, 212, 213, 214, 215 und zweiten Lichtumlenkelemente 221, 222 steht, angrenzend an die ebene Auftrittsfläche 210 Seitenflächen auf, welche mit einem Winkel βL von etwa 70 bis 90 Grad auf der Oberfläche 26 (bzw. auf der Unterfläche 27 für den Fall, dass das Lichtumlenkelement als Vertiefung in der Unterfläche 27 ausgebildet ist) steht. Insbesondere ein Winkel βL von etwa 70 bis kleiner als 90 Grad bietet fertigungstechnische Vorteile bei der Entformung des ersten Lichtleiters 2 bei dessen Herstellung im Spritzgussverfahren.

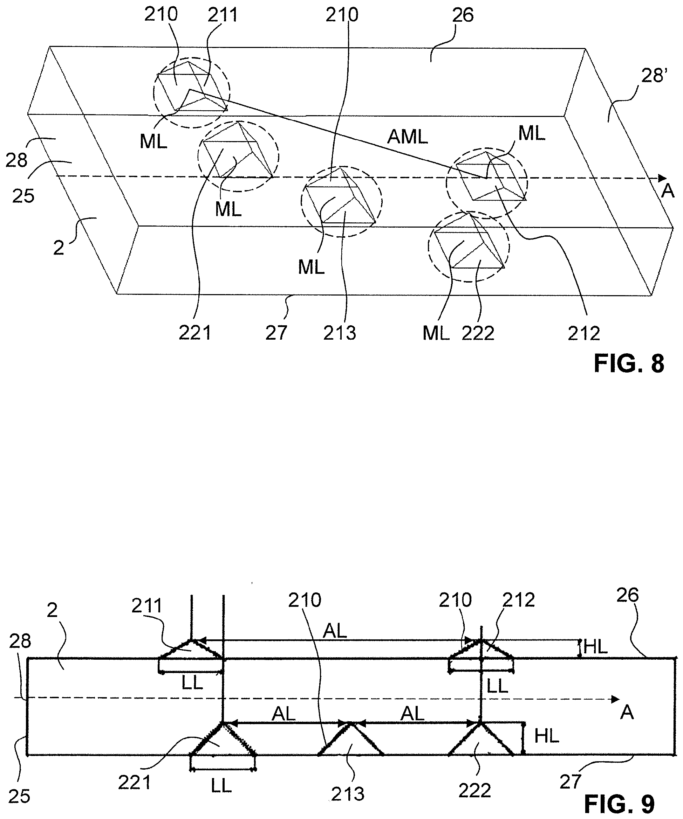

Eine weitere mögliche geometrische Ausgestaltung der ersten Lichtumlenkelemente 211, 212, 213, 214, 215 und der zweiten Lichtumlenkelemente 221, 222 ist in den Figuren 8 und 9 gezeigt. Für die ersten Lichtumlenkelemente sind in den Figuren 8 und 9 stellvertretend drei erste Lichtumlenkelemente 211, 212, 213 gezeigt und für die zweiten Lichtumlenkelemente stellvertretend die beiden zweiten Lichtumlenkelemente 221, 222. Die ersten Lichtumlenkelemente 211 und 212 sind jeweils in Form von Erhebungen im Bereich der Oberfläche 26 des ersten Lichtleiters 2 ausgebildet. Das erste Lichtumlenkelement 213 sowie die zweiten Lichtumlenkelemente 221, 222 sind jeweils in Form von Vertiefungen im Bereich der Unterfläche 27 des ersten Lichtleiters 2 ausgebildet. Die ersten und zweiten Lichtumlenkelemente 211, 212, 213 bzw. 221, 222 haben jeweils die geometrische Form eines Prismas mit zwei parallel zueinander stehenden gleichartigen Dreiecksflächen. Die sich parallel zur Oberfläche 26 bzw. zur Unterfläche 27 erstreckenden Seitenflächen der jeweiligen Prismen weisen jeweils eine rechteckige Form auf. In Richtung der Hauptfortpflanzungsrichtung A weisen die ersten und zweiten Lichtumlenkelemente 211, 212, 213 bzw. 221, 222 jeweils eine Länge LL von etwa 20 Mikrometer auf. Die Höhe HL der ersten Lichtumlenkelemente 211, 212, welche auf der Oberfläche 26 des ersten Lichtleiters 2 angeordnet sind, beträgt jeweils etwa 6 Mikrometer. Die Höhe HL derjenigen Lichtumlenkelemente 213, 221, 222, welche auf der Unterfläche 27 des ersten Lichtleiters 2 angeordnet sind, beträgt jeweils circa 10 Mikrometer.

Die ebenen Auftrittsflächen 210 der in den Figuren 8 und 9 gezeigten Lichtumlenkelemente 211, 212, 213 bzw. 221, 222 sind jeweils rechteckig ausgebildet. Die ebenen Auftrittsfläche 210 der auf der Oberfläche 26 angeordneten ersten Lichtumlenkelemente 211, 212 sind relativ zur Hauptfortpflanzungsrichtung A gesehen jeweils etwa 30 Grad geneigt. Die ebenen Auftrittsfläche 210 der auf der Unterfläche 27 angeordneten ersten und zweiten Lichtumlenkelemente 213, 221, 222 sind relativ zur Hauptfortpflanzungsrichtung A gesehen jeweils etwa 45 Grad geneigt.

Während die auf der Oberfläche 26 des ersten Lichtleiters 2 angeordneten ersten Lichtumlenkelemente 211, 212 in einem Abstand AL von etwa 70 Mikrometer zueinander angeordnet sind, betragen die Abstände AL zwischen den auf der Unterfläche 27 angeordneten ersten und zweiten Lichtumlenkelementen 213, 221, 222 jeweils etwa 20 Mikrometer.

Es gilt zu verstehen, dass die ersten und zweiten Lichtumlenkelemente 211, 212, 213, 214, 215 und 221, 222 sowie die Diffusorelemente 311, 312, 313, 314, 315 nicht auf die hier angegebenen geometrischen Ausgestaltungen bzw. Abmessungen sowie Anordnungen beschränkt sind. Viel eher soll anhand der erläuterten Beispiele illustriert werden, dass diese Elemente in einer Vielzahl von Ausgestaltungen vorhanden sein können, um eine effiziente Ausleuchtung des Bauteils zu bewirken. Beispielsweise können die ersten und/oder zweiten Lichtumlenkelemente 211, 212, 213, 214, 215 und 221, 222 nicht nur auf der Oberfläche 26 bzw. Unterfläche 27 des ersten Lichtleiters 2, sondern auch innerhalb des ersten Lichtleiters 2 ausgebildet sein. Gleiches gilt für die Diffusorelemente 311, 312, 313, 314, 315 des zweiten Lichtleiters 3. Weiter können die ersten und zweiten Lichtumlenkelemente 211, 212, 213, 214, 215 und 221, 222 sowie die Diffusorelemente 311, 312, 313, 314, 315 beliebig zum Beispiel pyramidenförmig, stumpfpyramidenförmig, quaderförmig, würfelförmig oder prismenförmig ausgebildet sein. Insbesondere bei den Diffusorelementen 311, 312, 313, 314, 315 sind auch konusförmige, zylinderförmige oder halbkugelförmige Geometrien möglich.

Bei der Leuchtquelle 5 handelt es sich hier um eine Leuchtdiode (LED), welche benachbart zur Lichteinkoppelfläche 25 des ersten Lichtleiters 2 angeordnet ist und welche Licht seitlich und entlang der Hauptfortpflanzungsrichtung A in den ersten Lichtleiter 2 einstrahlt. Die Angabe der Hauptfortpflanzungsrichtung A soll dabei nicht implizieren, dass sich innerhalb des ersten Lichtleiters 2 auch tatsächlich alle Lichtstrahlen in diese Richtung ausbreiten, sondern bedeutet vielmehr, dass die dominierende bzw. hauptsächliche Ausbreitungskomponente aller Lichtstrahlen in dieser Richtung verläuft.

In dem in der Figur 1 gezeigten Ausführungsbeispiel sind sämtliche der ersten und der zweiten Lichtumlenkelemente 211, 212, 213, 214, 215 bzw. 221, 222 in ersten Lichtumlenkgruppen 231, 232, 233, 234, 235 bzw. zweiten Lichtumlenkgruppen 241, 242 angeordnet. Die Lichtumlenkelemente einer gemeinsamen ersten oder zweiten Lichtumlenkgruppe 231, 232, 233, 234, 235 bzw. 241, 22 sind einerseits jeweils in einem selben gemeinsamen Bereich angeordnet, weisen andererseits aber jeweils auch dieselbe oder zumindest eine ähnliche Ausgestaltung auf. So sind die Lichtumlenkelemente 211, 212, 213, 214, 215 bzw. 221, 222 einer gemeinsamen ersten oder zweiten Lichtumlenkgruppe 231, 232, 233, 234, 235 bzw. 241, 242 jeweils insbesondere dazu ausgebildet, das in den ersten Lichtleiter 2 eingekoppelte Licht um denselben oder zumindest annähernd denselben Umlenkwinkel umzulenken.

Bei dem in der Figur 1 gezeigten Ausführungsbeispiel wird eine erste Lichtumlenkgruppe 231 von ersten Lichtumlenkelementen 211 gebildet, welche auf der Oberfläche 26 des ersten Lichtleiters 2 in der Nähe der Lichteinkoppelfläche 25 angeordnet sind. Die ersten Lichtumlenkelemente 211 dieser ersten Lichtumlenkgruppe 231 weisen jeweils eine ebene Auftrittsfläche 210 auf, welche in Bezug auf die Hauptfortpflanzungsrichtung A dieselbe Neigung haben. Licht, welches unter einem bestimmten Einfallswinkel auf die ersten Lichtumlenkelemente 211 dieser ersten Lichtumlenkgruppe 231 auftrifft, wird daher jeweils um denselben Umlenkwinkel umgelenkt.

Gleiches gilt für eine weitere erste Lichtumlenkgruppe 232, welche von den ersten Lichtumlenkelementen 212 gebildet wird, und welche nachfolgend zur ersten Lichtumlenkgruppe 231 mit etwas grösserem Abstand zur Leuchtquelle 5 auf der Oberfläche 26 des ersten Lichtleiters 2 angeordnet ist. Auch die ersten Lichtumlenkelemente 212 der ersten Lichtumlenkgruppe 232 weisen alle im Wesentlichen die gleiche Ausgestaltung auf und sind dazu ausgebildet, das Licht in jeweils zumindest annähernd dieselbe Richtung umzulenken.

Die für die Lichtumlenkung verantwortlichen Auftrittsflächen 210 der ersten Lichtumlenkelemente 212 der ersten Lichtumlenkgruppe 232 sind jedoch um einen leicht anderen Winkel relativ zur Hauptfortpflanzungsrichtung A geneigt als es die Auftrittsflächen 210 der ersten Lichtumlenkelemente 211 der ersten Lichtumlenkgruppe 231 sind. Dies führt dazu, dass sich diese beiden Lichtumlenkgruppen 231 und 232 somit in ihren Umlenkwinkeln unterscheiden, und dass das umgelenkte Licht somit in entsprechend leicht unterschiedliche Richtungen weitergeleitet wird.

Auch die ersten Lichtumlenkelemente 213, die ersten Lichtumlenkelemente 214 beziehungsweise die ersten Lichtumlenkelemente 215 auf der Unterfläche 27 des ersten Lichtleiters 2 verfügen innerhalb ihrer jeweiligen Lichtumlenkgruppe 233, 234 bzw. 235 jeweils über Auftrittsflächen 210 mit denselben oder zumindest annähernd denselben Neigungen relativ zur Hauptfortpflanzungsrichtung A. Je nach Lichtumlenkgruppe 233, 234 bzw. 235 wird das Licht von den entsprechenden Lichtumlenkelementen 213, 214, 215 aber um unterschiedliche Umlenkwinkel umgelenkt und somit in unterschiedliche Richtungen weitergeleitet.

Analog zu den ersten Lichtumlenkelementen 211, 212, 213, 214, 215 sind auch die zweiten Lichtumlenkelemente 221, 222 in Gruppen angeordnet, welche hier als zweite Lichtumlenkgruppen 241, 242 bezeichnet werden. Die zweiten Lichtumlenkelemente 221, 222 einer gemeinsamen zweiten Lichtumlenkgruppe 241, 242 sind jeweils im selben gemeinsamen Bereich angeordnet und weisen zudem jeweils auch dieselbe oder zumindest eine ähnliche Ausgestaltung auf. Insbesondere wird das Licht von zweiten Lichtumlenkelementen 221, 222, welche innerhalb einer selben Lichtumlenkgruppe 241 bzw. 242 angeordnet sind, jeweils um denselben oder zumindest annähernd denselben Umlenkwinkel umgelenkt.

Im vorliegenden Ausführungsbeispiel weisen die Auftrittsflächen 210 der zweiten Lichtumlenkelemente 221 der zweiten Lichtumlenkgruppe 241 und die Auftrittsflächen 210 der zweiten Lichtumlenkelemente 222 der zweiten Lichtumlenkgruppe 242 jeweils dieselbe Neigung bezüglich der Hauptfortpflanzungsrichtung A auf, so dass das Licht bei beiden zweiten Lichtumlenkgruppen 241 und 242 jeweils um denselben Umlenkwinkel umgelenkt wird. Es ist jedoch genauso möglich, dass zweite Lichtumlenkgruppen vorgesehen sind, welche Licht mit unterschiedlichen Umlenkwinkeln umlenken.

Wie ebenfalls aus Figur 1 hervorgeht, sind alle ersten Lichtumlenkelemente 211, 212, 213, 214, 215 einer gemeinsamen ersten Lichtumlenkgruppe 231, 232, 233, 234, 235 jeweils in einer gemeinsamen Ebene angeordnet, welche sich parallel zur Hauptfortpflanzungsrichtung A des eingekoppelten Lichts im ersten Lichtleiter 2 erstreckt. Genauso sind alle zweiten Lichtumlenkelemente 221, 222 einer gemeinsamen zweiten Lichtumlenkgruppe 241, 242 jeweils in einer gemeinsamen Ebene angeordnet, welche sich parallel zur Hauptfortpflanzungsrichtung A des eingekoppelten Lichts im ersten Lichtleiter 2 erstreckt.

Im vorliegenden Beispiel ist die zweite Lichtumlenkgruppe 241 der ersten Lichtumlenkgruppe 231 zugeordnet. Das heisst, die Neigung der Auftrittsflächen 210 der zweiten Lichtumlenkelemente 221 der zweiten Lichtumlenkgruppe 241 sowie die Anordnung der zweiten Lichtumlenkgruppe 241 relativ zur ersten Lichtumlenkgruppe 231 sind derart, dass das in den ersten Lichtleiter 2 eingekoppelte Licht von der zweiten Lichtumlenkgruppe 241 gerichtet in Richtung der ersten Lichtumlenkgruppe 231 umgelenkt wird. Analog dazu ist die zweite Lichtumlenkgruppe 242 der ersten Lichtumlenkgruppe 232 zugeordnet. Aufgrund einer solchen Mehrfachumlenkung des in den ersten Lichtleiter 2 eingekoppelten Lichts ist es möglich, das Licht der Leuchtquelle 5 effizient und ohne wesentliche Verluste um insgesamt sehr grosse Winkel, insbesondere um Winkel von mehr als 90°, umzulenken. Im Beispiel gemäss Figur 1 wird das eingekoppelte Licht durch die Wechselwirkung der ersten Lichtumlenkgruppe 231 bzw. 232 und der zweiten Lichtumlenkgruppe 241 bzw. 242 um etwa 130 bis 140 Grad bezüglich der Hauptfortpflanzungsrichtung A umgelenkt.

Je nach Dimensionierung der Lichtumlenkelemente 211, 212 der ersten Lichtumlenkgruppe 231, 232 können die zweiten Lichtumlenkelemente 221, 222 der zweiten Lichtumlenkgruppen 241, 242 derart ausgebildet sein, dass das Licht innerhalb der jeweiligen zweiten Lichtumlenkgruppe 241, 242 von den zweiten Lichtumlenkelementen 221, 222 zwar jeweils annähernd in die gleiche Richtung umgelenkt wird, aber dass gleichzeitig eine gewisse Fokussierung oder Auffächerung der Lichtstrahlen erzeugt wird, so dass die von der ersten Lichtumlenkgruppe 231 bzw. 232 abgedeckte Fläche vom umgelenkten Licht gerade vollständig ausgeleuchtet wird.

Analog zu den ersten und zweiten Lichtumlenkelementen 211, 212, 213, 214, 215 bzw. 221, 222 sind auch die Diffusorelemente 311, 312, 313, 314, 315 im zweiten Lichtleiter 3 in mehreren Diffusorelementgruppen 321, 322, 323, 324, 325 angeordnet. Jeder der Lichtleiterabschnitte 361, 362, 363, 364, 365 weist jeweils eine der Diffusorelementgruppen 321, 322, 323, 324, 325 auf.

Alle Diffusorelemente 311, 312, 313, 314, 315 einer gemeinsamen Diffusorelementgruppe 321, 322, 323, 324, 325 sind jeweils gleich ausgebildet. Ausserdem sind alle Diffusorelemente 312, 313, 314, 315 einer gemeinsamen Diffusorelementgruppe 322, 323, 324, 325 in einer gemeinsamen Ebene angeordnet, wobei unterschiedliche Diffusorelementgruppen 322, 323, 324, 325 entsprechend der Ausrichtung der jeweiligen Lichtleiterabschnitte 362, 363, 364, 365 zueinander geneigte Ebenen bilden.

Jeder der Diffusorelementgruppen 321, 322, 323, 324, 325 ist jeweils eine der ersten Lichtumlenkgruppen 231, 232, 233, 234, 235 zugeordnet, so dass das in den ersten Lichtleiter 2 eingekoppelte Licht von jeder der ersten Lichtumlenkgruppen 231, 232, 233, 234, 235 jeweils in Richtung von einer der Diffusorelementgruppen 321, 322, 323, 324, 325 umgelenkt wird. Wie aus der Figur 1 hervorgeht, ist einer ersten Diffusorelementgruppe 321 mit den Diffusorelementen 311 die erste Lichtumlenkgruppe 231 zugeordnet, wobei das Licht, welches von den ersten Lichtumlenkelementen 211 dieser ersten Lichtumlenkgruppe 231 umgelenkt wird, gerichtet auf die Diffusorelemente 311 auftrifft. Analog dazu ist die erste Lichtumlenkgruppe 232 einer zweiten Diffusorelementgruppe 322 mit den Diffusorelementen 312, die erste Lichtumlenkgruppe 233 einer dritten Diffusorelementgruppe 323 mit den Diffusorelementen 313, die erste Lichtumlenkgruppe 234 einer vierten Diffusorelementgruppe 324 mit den Diffusorelementen 314 sowie die erste Lichtumlenkgruppe 235 einer fünften Diffusorelementgruppe 325 mit den Diffusorelementen 315 zugeordnet.

Zwischen dem ersten Lichtleiter 2 und dem zweiten Lichtleiter 3 ist eine Struktur 4 vorgesehen, welche auch als Tragestruktur bezeichnet werden kann. Die Struktur 4 ist bevorzugt im Spritzgussverfahren aus einem Kunststoff hergestellt und insbesondere als Ganzes einstückig ausgebildet. Die Struktur 4 dient einerseits zum Halten des zweiten Lichtleiters 3. Andererseits weist sie Kanäle 411, 412, 413, 414, 415 auf, um das umgelenkte Licht zwischen den ersten Lichtumlenkstrukturen 211, 212, 213, 214, 215 und den Diffusorelementen 311, 312, 313, 314, 315 bzgl. seiner Ausbreitung zu begrenzen. Die Kanäle 411, 412, 413, 414, 415 verlaufen dabei jeweils zwischen einer der ersten Lichtumlenkgruppen 231, 232, 233, 234, 235 und der entsprechend zugeordneten Diffusorelementgruppe 321, 322, 323, 324, 325.

Die Kanäle 411, 412, 413, 414, 415 sind jeweils zu allen Seiten hin von lichtabsorbierend ausgebildeten Strukturwänden begrenzt, von denen in der Figur 1 die Strukturwände 421, 422, 423, 424, 425, 426 erkennbar sind.

In dem in Figur 1 gezeigten Ausführungsbeispiel ist die Struktur 4 beabstandet vom ersten Lichtleiter 2 angeordnet. Es ist jedoch auch möglich, dass die Struktur 4 und insbesondere die Strukturwände 421, 422, 423, 424, 425, 426 unmittelbar auf der Oberfläche 26 des ersten Lichtleiters 2 aufliegen. Wie aus der Figur 1 hervorgeht, weisen die Strukturwände 421, 422, 425, 426 und entsprechend die von diesen Strukturwänden begrenzten Kanäle 411, 415 bezüglich der Oberfläche 26 des ersten Lichtleiters 2 eine gewisse Neigung von ca. 45° auf. Diese Neigung steht in direkter Beziehung mit der Neigung der entsprechenden Lichtleiterabschnitte 361, 365 des zweiten Lichtleiters 3 respektive mit dem Umlenkwinkel, um welchen das Licht von den ersten Lichtumlenkelementen 211, 215 in Richtung der Diffusorelemente 311, 315 gerichtet umgelenkt wird.

Um eine ausreichende Leuchtdichte oder Ausleuchtung an der Sichtseite 11 des Bauteils 1 zu erzielen, ist eine möglichst grosse Anzahl von ersten und zweiten Lichtumlenkelementen 211, 212, 213, 214, 215 bzw. 221, 222 und/oder Diffusorelementen 311, 312, 313, 314, 315 von Vorteil. Gleichzeitig wirkt es jedoch unästhetisch, wenn diese Elemente im unbeleuchteten Zustand, also wenn von der Leuchtquelle 5 kein Licht in den ersten Lichtleiter 2 eingekoppelt wird, vom menschlichen Auge sichtbar sind.

Damit mittels der ersten Lichtumlenkelemente 211, 212, 213, 214, 215 eine möglichst effiziente Lichtumlenkung und dadurch bei der Ausleuchtung eine hohe Leuchtdichte erreicht wird, ist die Dimensionierung und Anordnung der ersten Lichtumlenkelemente 211, 212, 213, 214, 215 bevorzugt wie folgt: Wie aus den Figuren 8 und 9 stellvertretend anhand der ersten Lichtumlenkelemente 211, 212, 213 hervorgeht, weisen die jeweiligen ersten Lichtumlenkelemente 211, 212, 213, 214, 215 einen Kreis als Querschnitt mit einem Mittelpunkt auf oder um den Querschnitt eines jeweiligen ersten Lichtumlenkelementes 211, 212, 213, 214, 215 ist ein Umkreis mit einem Mittelpunkt ML legbar. Weiter weist der Mittelpunkt ML des Kreises bzw. des Umkreises eines jeweiligen ersten Lichtumlenkelements 211, 212, 213, 214, 215 einer jeweiligen ersten Lichtumlenkgruppe 231, 232, 233, 234, 235 zum Mittelpunkt ML des Kreises bzw. des Umkreises sämtlicher weiterer ersten Lichtumlenkelemente 211, 212, 213, 214, 215 der jeweiligen ersten Lichtumlenkgruppe 231, 232, 233, 234, 235 einen Abstand AML auf, welcher kleiner als der Durchmesser des Kreises bzw. des Umkreises des jeweiligen ersten Lichtumlenkelements 211, 212, 213, 214, 215 geteilt durch den Wert 0.33 ist.

Diese geometrischen Abmessungen ergeben einen ersten Lichtleiter 2, welcher über eine hohe Dichte an ersten Lichtumlenkelementen 211, 212, 213, 214, 215 verfügt und so eine effiziente Beleuchtung des Bauteils 1 gewährleistet. Analoge Abmessungen sind auch für die zweiten Lichtumlenkelemente 221, 222 bevorzugt, so dass auch die Lichtumlenkung mittels der zweiten Lichtumlenkelemente 221, 222 möglichst effizient ist.

Damit die Diffusorelemente 311, 312, 313, 314, 315 im unbeleuchteten Zustand des Bauteils 1 vom menschlichen Auge unsichtbar sind, ist die Dimensionierung und Anordnung der Diffusorelemente 311, 312, 313, 314, 315 bevorzugt wie folgt: Ein jeweiliges Diffusorelement 311, 312, 313, 314, 315 weist einen Kreis als Querschnitt mit einem Mittelpunkt auf oder um den Querschnitt eines jeweiligen Diffusorelementes 311, 312, 313, 314, 315 ist ein Umkreis mit einem Mittelpunkt legbar, wobei der Mittelpunkt des Kreises bzw. des Umkreises eines jeweiligen Diffusorelements 311, 312, 313, 314, 315 einer jeweiligen Diffusorelementgruppe 321, 322, 323, 324, 325 zum Mittelpunkt des Kreises bzw. des Umkreises sämtlicher weiterer Diffusorelemente 311, 312, 313, 314, 315 der jeweiligen Diffusorelementgruppe 321, 322, 323, 324, 325 einen Abstand aufweist, welcher grösser als der Durchmesser des Kreises bzw. des Umkreises des jeweiligen Diffusorelements 311, 312, 313, 314, 315 geteilt durch den Wert 0.33 ist.

Der erste wie auch der zweite Lichtleiter 2, 3 werden bevorzugt mittels des sogenannten LIGA-Fertigungsverfahrens (Akronym für Lithographie, Galvanik und Abformung), insbesondere mittels der sogenannten Grauton-Lithographie, hergestellt werden. Wie es dem Fachmann bekannt ist, ermöglichen diese Verfahren die Herstellung von Lichtleitern mit an der Oberfläche ausgebildeten Mikrostrukturen. Vor allem die Grauton-Lithographie ermöglicht die Herstellung von präzisen, genau definierten Strukturen mit exakt vorgegebenen Abmessungen im Mikrometerbereich, wie es zur Herstellung der ersten und zweiten Lichtumlenkelemente 211, 212, 213, 214, 215 bzw. 221, 222 sowie der Diffusorelemente 311, 312, 313, 314, 315 erforderlich ist.

Bei einer bevorzugten Herstellung des ersten Lichtleiters 2 oder des zweiten Lichtleiters 3 wird zunächst ein Fotolack auf ein Substrat aufgetragen und alsdann eine definierte geometrische Struktur im Fotolack und/oder im Substrat mittels der Grauton-Lithographie hergestellt. Dann wird eine Beschichtung, insbesondere eine Beschichtung aus Metall wie zum Beispiel Nickel, mittels Galvanik auf den strukturierten Fotolack und/oder das strukturierte Substrat aufgetragen. Dabei wird die Strukturierung des Fotolacks und/oder des Substrates auf die Beschichtung übertragen, so dass eine Beschichtung mit einer definierten Struktur entsteht. In einem nächsten Schritt wird die Beschichtung mit der definierten Struktur von Substrat und Fotolack abgetrennt und als Werkzeugeinsatz in einem Spritzgusswerkzeug verwendet, in welchem schliesslich die ersten und zweiten Lichtleiter 2 bzw. 3 im Spritzgussverfahren hergestellt werden können.

### BEZUGSZEICHENLISTE

- 1: Bauteil
- 11: Sichtseite

- 2: erster Lichtleiter
- 211, 212, 213, 214, 215: erste Lichtumlenkelemente
- 221, 222: zweite Lichtumlenkelemente
- 210: Auftrittsfläche
- 231, 232, 233, 234, 235: erste Lichtumlenkgruppen
- 241, 242: zweite Lichtumlenkgruppen
- 25: Lichteinkoppelfläche
- 26: Oberfläche
- 27: Unterfläche
- 28, 28': Seitenfläche

- 3: zweiter Lichtleiter
- 311, 312, 313, 314, 315: Diffusorelemente
- 321, 322, 323, 324, 325: Diffusorelementgruppen
- 33: Oberseite
- 34: Unterseite
- 35: Aussenseite
- 361, 362, 363, 364, 365: Lichtleiterabschnitte

- 4: Struktur
- 411, 412, 413, 414, 415: Kanal
- 421, 422, 423, 424, 425, 426: Strukturwände

- 5: Leuchtquelle

- 6: Dekorelement
- 611, 612, 613, 614, 615: Durchbrüche
- A: Hauptfortpflanzungsrichtung
- B: Breite Lichtumlenkelement
- LL: Länge Lichtumlenkelement
- LD: Länge Diffusorelement
- HL: Höhe Lichtumlenkelement
- HD: Höhe Diffusorelement
- QL: Querschnitt von Lichtumlenkelement
- QD: Querschnitt von Diffusorelement
- AL: Abstand zwischen Lichtumlenkelementen
- AD: Abstand zwischen Diffusorelementen
- ML: Mittelpunkt Lichtumlenkelement
- AML: Abstand zwischen Mittelpunkten von Lichtumlenkelementen
- αL: Winkel
- βL: Winkel

## Patentansprüche

1. Bauteil (1) für ein Fahrzeug mit einer Sichtseite (11), aufweisend:
einen ersten Lichtleiter (2), welcher eine Lichteinkoppelfläche (25) und mehrere erste Lichtumlenkelemente (211, 212, 213, 214, 215) aufweist, wobei Licht durch die Lichteinkoppelfläche (25) in den ersten Lichtleiter (2) einkoppelbar ist;
einen zweiten Lichtleiter (3), welcher beabstandet zum ersten Lichtleiter (2) angeordnet ist und mehrere Diffusorelemente (311, 312, 313, 314, 315) aufweist, welche dazu ausgebildet sind, Licht diffus zu streuen; sowie
eine zwischen dem ersten Lichtleiter (2) und dem zweiten Lichtleiter (3) angeordnete Struktur (4) mit zumindest einem von Strukturwänden (421, 422, 423, 424, 425, 426) seitlich begrenzten Kanal (411, 412, 413, 414, 415) zur Begrenzung des gerichtet umgelenkten Lichts zwischen dem ersten Lichtleiter (2) und dem zweiten Lichtleiter (3),
wobei die ersten Lichtumlenkelemente (211, 212, 213, 214, 215) jeweils dazu ausgebildet sind, das in den ersten Lichtleiter (2) eingekoppelte Licht um einen Umlenkwinkel gerichtet in Richtung der Diffusorelemente (311, 312, 313, 314, 315) umzulenken, so dass die Diffusorelemente (311, 312, 313, 314, 315) dieses gerichtete Licht diffus in Richtung der Sichtseite (11) streuen,
**dadurch gekennzeichnet, dass**
die Strukturwände (421, 422, 423, 424, 425, 426) lichtabsorbierend ausgebildet sind und eine Beschichtung aus einem lichtabsorbierenden Material aufweisen.

2. Bauteil (1) nach Anspruch 1, wobei die ersten Lichtumlenkelemente (211, 212, 213, 214, 215) derart in einer oder mehreren ersten Lichtumlenkgruppen (231, 232, 233, 234, 235) angeordnet sind, dass die ersten Lichtumlenkelemente (211, 212, 213, 214, 215) das in den ersten Lichtleiter (2) eingekoppelte Licht innerhalb jeder der ersten Lichtumlenkgruppen (231, 232, 233, 234, 235) jeweils um denselben Umlenkwinkel gerichtet umlenken.

3. Bauteil (1) nach Anspruch 2, wobei alle ersten Lichtumlenkelemente (211, 212, 213, 214, 215) einer gemeinsamen ersten Lichtumlenkgruppe (231, 232, 233, 234, 235) jeweils in einer gemeinsamen Ebene angeordnet sind, welche sich insbesondere im Wesentlichen parallel bezüglich einer Hauptfortpflanzungsrichtung (A) des eingekoppelten Lichts im ersten Lichtleiter (2) erstreckt.

4. Bauteil (1) nach einem der Ansprüche 2 oder 3, wobei mehrere erste Lichtumlenkgruppen (231, 232, 233, 234, 235) vorhanden sind, und wobei die ersten Lichtumlenkelemente (211, 212, 213, 214, 215) von unterschiedlichen ersten Lichtumlenkgruppen (231, 232, 233, 234, 235) das in den ersten Lichtleiter (2) eingekoppelte Licht um jeweils unterschiedliche Umlenkwinkel gerichtet umlenken.

5. Bauteil (1) nach einem der vorhergehenden Ansprüche, wobei die Diffusorelemente (311, 312, 313, 314, 315) in einer oder mehreren Diffusorelementgruppen (321, 322, 323, 324, 325) angeordnet sind, und wobei insbesondere alle Diffusorelemente (311, 312, 313, 314, 315) einer gemeinsamen Diffusorelementgruppe (321, 322, 323, 324, 325) jeweils in einer gemeinsamen Ebene angeordnet sind.

6. Bauteil (1) nach Anspruch 5, wobei jeder der Diffusorelementgruppen (321, 322, 323, 324, 325) jeweils eine der ersten Lichtumlenkgruppen (231, 232, 233, 234, 235) zugeordnet ist, so dass das in den ersten Lichtleiter (2) eingekoppelte Licht von jeder der ersten Lichtumlenkgruppen (231, 232, 233, 234, 235) jeweils in Richtung von einer der Diffusorelementgruppen (321, 322, 323, 324, 325) umgelenkt wird.

7. Bauteil (1) nach einem der Ansprüche 5 oder 6, wobei mehrere Diffusorelementgruppen (321, 322, 323, 324, 325) vorhanden sind und alle Diffusorelemente (311, 312, 313, 314, 315) einer gemeinsamen Diffusorelementgruppe (321, 322, 323, 324, 325) jeweils in einer gemeinsamen Ebene angeordnet sind, und wobei die Diffusorelemente (311, 312, 313, 314, 315) von unterschiedlichen Diffusorelementgruppen (321, 322, 323, 324, 325) jeweils in einer zueinander geneigten Ebenen angeordnet sind.

8. Bauteil (1) nach einem der vorhergehenden Ansprüche, wobei der erste Lichtleiter (2) ausserdem mehrere zweite Lichtumlenkelemente (221, 222) aufweist, welche jeweils dazu ausgebildet sind, das in den ersten Lichtleiter (2) eingekoppelte Licht in Richtung der ersten Lichtumlenkelemente (211, 212) gerichtet umzulenken.

9. Bauteil (1) nach Anspruch 8, wobei die zweiten Lichtumlenkelemente (221, 222) derart in einer oder mehreren zweiten Lichtumlenkgruppen (241, 242) angeordnet sind, dass die zweiten Lichtumlenkelemente (221, 222) das in den ersten Lichtleiter (2) eingekoppelte Licht innerhalb jeder der zweiten Lichtumlenkgruppen (241, 242) jeweils um denselben Umlenkwinkel gerichtet umlenken.

10. Bauteil (1) nach Anspruch 9, wobei alle zweiten Lichtumlenkelemente (221, 222) einer gemeinsamen zweiten Lichtumlenkgruppe (221, 222) jeweils in einer gemeinsamen Ebene angeordnet sind, welche sich insbesondere im Wesentlichen parallel bezüglich einer Hauptfortpflanzungsrichtung (A) des eingekoppelten Lichts im ersten Lichtleiter (2) erstreckt.

11. Bauteil (1) nach einem der Ansprüche 9 oder 10, wobei mehrere zweite Lichtumlenkgruppen (241, 242) vorhanden sind, und wobei die zweiten Lichtumlenkelemente (221, 222) von unterschiedlichen zweiten Lichtumlenkgruppen (221, 222) das in den ersten Lichtleiter (2) eingekoppelte Licht um jeweils unterschiedliche Umlenkwinkel gerichtet umlenken.

12. Bauteil (1) nach einem der Ansprüche 9 bis 11, wobei jeder der zweiten Lichtumlenkgruppen (241, 242) jeweils eine der ersten Lichtumlenkgruppen (231, 232) zugeordnet ist, so dass das in den ersten Lichtleiter (2) eingekoppelte Licht von jeder der zweiten Lichtumlenkgruppen (241, 242) jeweils in Richtung von einer der ersten Lichtumlenkgruppen (231, 232) umgelenkt wird.

13. Bauteil (1) nach einem der vorhergehenden Ansprüche, wobei ein jeweiliges erstes Lichtumlenkelement (211, 212, 213, 214, 215) einen Kreis als Querschnitt mit einem Mittelpunkt aufweist oder um den Querschnitt eines jeweiligen ersten Lichtumlenkelementes (211, 212, 213, 214, 215) ein Umkreis mit einem Mittelpunkt (ML) legbar ist, und wobei der Mittelpunkt des Kreises bzw. des Umkreises eines jeweiligen ersten Lichtumlenkelements (211, 212, 213, 214, 215) zum Mittelpunkt des Kreises bzw. des Umkreises sämtlicher weiteren ersten Lichtumlenkelemente (211, 212, 213, 214, 215) einen Abstand (AML) aufweist, welcher kleiner als der Durchmesser des Kreises bzw. des Umkreises des jeweiligen ersten Lichtumlenkelements (211, 212, 213, 214, 215) geteilt durch den Wert 0.33 ist, wobei bevorzugt das jeweilige erste Lichtumlenkelement (211, 212, 213, 214, 215) sowie sämtliche weiteren ersten Lichtumlenkelemente (211, 212, 213, 214, 215) einer jeweiligen gemeinsamen ersten Lichtumlenkgruppe (231, 232, 233, 234, 235) angehören, wobei bevorzugt sämtliche ersten Lichtumlenkelemente (211, 212, 213, 214, 215) der jeweiligen gemeinsamen ersten Lichtumlenkgruppe (231, 232, 233, 234, 235) in einer gemeinsamen Ebene angeordnet sind.

14. Bauteil (1) nach einem der vorhergehenden Ansprüche, wobei ein jeweiliges Diffusorelement (311, 312, 313, 314, 315) einen Kreis als Querschnitt mit einem Mittelpunkt aufweist oder um den Querschnitt eines jeweiligen Diffusorelementes (311, 312, 313, 314, 315) ein Umkreis mit einem Mittelpunkt legbar ist, und wobei der Mittelpunkt des Kreises bzw. des Umkreises eines jeweiligen Diffusorelements (311, 312, 313, 314, 315) zum Mittelpunkt des Kreises bzw. des Umkreises sämtlicher weiteren Diffusorelemente (311, 312, 313, 314, 315) einen Abstand aufweist, welcher grösser als der Durchmesser des Kreises bzw. des Umkreises des jeweiligen Diffusorelements (311, 312, 313, 314, 315) geteilt durch den Wert 0.33 ist, wobei bevorzugt das jeweilige Diffusorelement (311, 312, 313, 314, 315) sowie sämtliche weiteren Diffusorelemente (311, 312, 313, 314, 315) einer jeweiligen gemeinsamen Diffusorelementgruppe (321, 322, 323, 324, 325) angehören, wobei bevorzugt sämtliche Diffusorelemente (311, 312, 313, 314, 315) der jeweiligen gemeinsamen Diffusorelementgruppe (321, 322, 323, 324, 325) in einer gemeinsamen Ebene angeordnet sind.

15. Bauteil (1) nach einem der vorhergehenden Ansprüche, weiter umfassend mindestens eine Leuchtquelle (5), vorzugsweise genau eine Leuchtquelle (5), um das Licht in den ersten Lichtleiter (2) einzukoppeln.

## Claims

1. A component (1)for a vehicle with a viewing side (11), comprising:
a first light guide (2), which comprises a light-coupling surface (25) and a plurality of first light-deflecting elements (211, 212, 213, 214, 215), wherein light can be coupled into the first light guide (2) through the light-coupling surface (25);
a second light guide (3), which is arranged at a distance from the first light guide (2) and comprises a plurality of diffuser elements (311, 312, 313, 314, 315) configured to diffusely scatter light; and
a structure (4) arranged between the first light guide (2) and the second light guide (3), comprising at least one channel (411, 412, 413, 414, 415) delimited laterally by structural walls (421, 422, 423, 424, 425, 426) for confining the directionally deflected light between the first light guide (2) and the second light guide (3),
wherein the first light-deflecting elements (211, 212, 213, 214, 215) are each configured to directionally deflect the light coupled into the first light guide (2) by a deflection angle toward the diffuser elements (311, 312, 313, 314, 315), such that the diffuser elements (311, 312, 313, 314, 315) diffusely scatter this directed light toward the viewing side (11),
**characterized in that**
the structural walls (421, 422, 423, 424, 425, 426) are designed to absorb light and comprise a coating of a light-absorbing material.

2. The component (1) according to claim 1, wherein the first light-deflecting elements (211, 212, 213, 214, 215) are arranged in one or more first light-deflecting groups (231, 232, 233, 234, 235) such that the first light-deflecting elements (211, 212, 213, 214, 215) deflect the light coupled into the first light guide (2) within each of the first light-deflecting groups (231, 232, 233, 234, 235) by the same deflection angle.

3. The component (1) according to claim 2, wherein all first light-deflecting elements (211, 212, 213, 214, 215) of a common first light-deflecting group (231, 232, 233, 234, 235) are each arranged in a common plane, which extends, in particular, substantially parallel to a main propagation direction (A) of the coupled light in the first light guide (2).

4. The component (1) according to one of claims 2 or 3, wherein there are multiple first light-deflecting groups (231, 232, 233, 234, 235), and wherein the first light-deflecting elements (211, 212, 213, 214, 215) of different first light-deflecting groups (231, 232, 233, 234, 235) deflect the light coupled into the first light guide (2) in a directed manner by respective different deflection angles.

5. The component (1) according to any one of the preceding claims, wherein the diffuser elements (311, 312, 313, 314, 315) are arranged in one or more diffuser element groups (321, 322, 323, 324, 325), and wherein, in particular, all diffuser elements (311, 312, 313, 314, 315) of a common diffuser element group (321, 322, 323, 324, 325) are each arranged in a common plane.

6. The component (1) according to claim 5, wherein each of the diffuser element groups (321, 322, 323, 324, 325) is respectively associated with one of the first light-deflecting groups (231, 232, 233, 234, 235), such that the light coupled into the first light guide (2) is deflected by each of the first light-deflecting groups (231, 232, 233, 234, 235) in the direction of one of the diffuser element groups (321, 322, 323, 324, 325).

7. The component (1) according to one of claims 5 or 6, wherein there are multiple diffuser element groups (321, 322, 323, 324, 325) and all diffuser elements (311, 312, 313, 314, 315) of a common diffuser element group (321, 322, 323, 324, 325) are each arranged in a common plane, and wherein the diffuser elements (311, 312, 313, 314, 315) from different diffuser element groups (321, 322, 323, 324, 325) are each arranged in planes inclined relative to one another.

8. The component (1) according to any one of the preceding claims, wherein the first light guide (2) further comprises a plurality of second light-deflecting elements (221, 222), each of which is configured to deflect the light coupled into the first light guide (2) in the direction of the first light-deflecting elements (211, 212).

9. The component (1) according to claim 8, wherein the second light-deflecting elements (221, 222) are arranged in one or more second light-deflecting groups (241, 242) such that the second light-deflecting elements (221, 222) deflect the light coupled into the first light guide (2) within each of the second light-deflecting groups (241, 242) by the same deflection angle.

10. The component (1) according to claim 9, wherein all second light-deflecting elements (221, 222) of a common second light-deflecting group (221, 222) are each arranged in a common plane, which extends, in particular, substantially parallel to a main propagation direction (A) of the light coupled into the first light guide (2).

11. The component (1) according to any one of claims 9 or 10, wherein multiple second light-deflecting groups (241, 242) are present, and wherein the second light-deflecting elements (221, 222) of different second light-deflecting groups (221, 222) deflect the light coupled into the first light guide (2) by different deflection angles.

12. The component (1) according to any one of claims 9 to 11, wherein each of the second light deflection groups (241, 242) is respectively associated with one of the first light deflection groups (231, 232), such that the light coupled into the first light guide (2) is deflected by each of the second light-deflecting groups (241, 242) in the direction of one of the first light-deflecting groups (231, 232).

13. The component (1) according to any one of the preceding claims, wherein a respective first light-deflecting element (211, 212, 213, 214, 215) comprises a circle in cross-section with a center, or wherein a circumscribed circle with a center (ML) can be drawn around the cross-section of a respective first light-deflecting element (211, 212, 213, 214, 215), and wherein the center of the circle or of the circumscribed circle of a respective first light-deflecting element (211, 212, 213, 214, 215) is a distance (AML) from the center of the circle or of the circumscribed circle of all other first light-deflecting elements (211, 212, 213, 214, 215), which distance is less than the diameter of the circle or of the circumscribed circle of the respective first light-deflecting element (211, 212, 213, 214, 215) divided by the value 0.33, wherein preferably the respective first light-deflecting element (211, 212, 213, 214, 215) as well as all other first light-deflecting elements (211, 212, 213, 214, 215) belong to a respective common first light-deflecting group (231, 232, 233, 234, 235), wherein preferably all first light-deflecting elements (211, 212, 213, 214, 215) of the respective common first light-deflecting group (231, 232, 233, 234, 235) are arranged in a common plane.

14. The component (1) according to any one of the preceding claims, wherein a respective diffuser element (311, 312, 313, 314, 315) comprises a circle in cross-section with a center, or wherein a circumscribed circle with a center can be drawn around the cross-section of a respective diffuser element (311, 312, 313, 314, 315), and wherein the center of the circle or of the circumscribed circle of a respective diffuser element (311, 312, 313, 314, 315) is a distance from the center of the circle or of the circumscribed circle of all other diffuser elements (311, 312, 313, 314, 315), which is greater than the diameter of the circle or of the circumscribed circle of the respective diffuser element (311, 312, 313, 314, 315) divided by the value 0.33, wherein preferably the respective diffuser element (311, 312, 313, 314, 315) as well as all other diffuser elements (311, 312, 313, 314, 315) belong to a respective common diffuser element group (321, 322, 323, 324, 325), wherein preferably all diffuser elements (311, 312, 313, 314, 315) of the respective common diffuser element group (321, 322, 323, 324, 325) are arranged in a common plane.

15. The component (1) according to any one of the preceding claims, further comprising at least one light source (5), preferably exactly one light source (5), for coupling light into the first light guide (2).

## Revendications

1. Composant (1) pour un véhicule, comportant une face visible (11), comprenant :
un premier guide de lumière (2), qui comporte une surface de couplage de lumière (25) et plusieurs premiers éléments de déviation de lumière (211, 212, 213, 214, 215), la lumière pouvant être injectée dans le premier guide de lumière (2) à travers la surface de couplage de lumière (25) ;
un deuxième guide de lumière (3), qui est disposé à distance du premier guide de lumière (2) et qui comporte plusieurs éléments de diffusion (311, 312, 313, 314, 315) conçus pour disperser la lumière de manière diffuse ; ainsi que
une structure (4) disposée entre le premier guide de lumière (2) et le deuxième guide de lumière (3), comportant au moins un canal (411, 412, 413, 414, 415) délimité latéralement par des parois de structure (421, 422, 423, 424, 425, 426) afin de délimiter la lumière déviée de manière directionnelle entre le premier guide de lumière (2) et le deuxième guide de lumière (3),
les premiers éléments de déviation de lumière (211, 212, 213, 214, 215) étant chacun conçus pour dévier de manière directionnelle la lumière injectée dans le premier guide de lumière (2) d'un angle de déviation en direction des éléments de diffusion (311, 312, 313, 314, 315) de manière à ce que les éléments de diffusion (311, 312, 313, 314, 315) dispersent cette lumière dirigée de manière diffuse vers la face visible (11),
**caractérisé en ce que**
les parois de structure (421, 422, 423, 424, 425, 426) sont conçues pour absorber la lumière et comportent un revêtement en un matériau absorbant la lumière.

2. Composant (1) selon la revendication 1, dans lequel les premiers éléments de déviation de lumière (211, 212, 213, 214, 215) sont disposés dans un ou plusieurs premiers groupes de déviation de lumière (231, 232, 233, 234, 235) de telle sorte que les premiers éléments de déviation de lumière (211, 212, 213, 214, 215) dévient la lumière injectée dans le premier guide de lumière (2) au sein de chacun des premiers groupes de déviation de lumière (231, 232, 233, 234, 235) selon le même angle de déviation.

3. Composant (1) selon la revendication 2, dans lequel tous les premiers éléments de déviation de lumière (211, 212, 213, 214, 215) d'un ou plusieurs premiers groupes communs de déviation de lumière (231, 232, 233, 234, 235) sont disposés dans un plan commun, lequel s'étend notamment de manière sensiblement parallèle à une direction principale de propagation (A) de la lumière injectée dans le premier guide de lumière (2).

4. Composant (1) selon l'une des revendications 2 ou 3, dans lequel plusieurs premiers groupes de déviation de lumière (231, 232, 233, 234, 235) sont présents, et dans lequel les premiers éléments de déviation de lumière (211, 212, 213, 214, 215) de différents premiers groupes de déviation de lumière (231, 232, 233, 234, 235) dévient la lumière injectée dans le premier guide de lumière (2) selon des angles de déviation respectivement différents.

5. Composant (1) selon l'une des revendications précédentes, dans lequel les éléments de diffusion (311, 312, 313, 314, 315) sont disposés en un ou plusieurs groupes d'éléments de diffusion (321, 322, 323, 324, 325), et dans lequel, en particulier, tous les éléments de diffusion (311, 312, 313, 314, 315) d'un groupe commun d'éléments de diffusion (321, 322, 323, 324, 325) sont chacun disposés dans un plan commun.

6. Composant (1) selon la revendication 5, dans lequel chacun des groupes d'éléments de diffusion (321, 322, 323, 324, 325) est associé à l'un des premiers groupes de déviation de lumière (231, 232, 233, 234, 235), de sorte que la lumière injectée dans le premier guide de lumière (2) est déviée par chacun des premiers groupes de déviation de lumière (231, 232, 233, 234, 235) respectivement en direction de l'un des groupes d'éléments de diffusion (321, 322, 323, 324, 325).

7. Composant (1) selon l'une des revendications 5 ou 6, dans lequel plusieurs groupes d'éléments de diffusion (321, 322, 323, 324, 325) sont présents et tous les éléments de diffusion (311, 312, 313, 314, 315) d'un groupe commun d'éléments de diffusion (321, 322, 323, 324, 325) sont chacun disposés dans un plan commun, et dans lequel les éléments de diffusion (311, 312, 313, 314, 315) de différents groupes d'éléments de diffusion (321, 322, 323, 324, 325) sont disposés respectivement dans des plans inclinés les uns par rapport aux autres.

8. Composant (1) selon l'une des revendications précédentes, dans lequel le premier guide de lumière (2) comporte en outre plusieurs deuxièmes éléments de déviation de lumière (221, 222), qui sont chacun conçus pour dévier la lumière injectée dans le premier guide de lumière (2) en direction des premiers éléments de déviation de lumière (211, 212).

9. Composant (1) selon la revendication 8, dans lequel les deuxièmes éléments de déviation de lumière (221, 222) sont disposés dans un ou plusieurs deuxièmes groupes de déviation de lumière (241, 242) de telle sorte que les deuxièmes éléments de déviation de lumière (221, 222) dévient la lumière injectée dans le premier guide de lumière (2) au sein de chacun des deuxièmes groupes de déviation de lumière (241, 242) respectivement d'un même angle de déviation.

10. Composant (1) selon la revendication 9, dans lequel tous les deuxièmes éléments de déviation de lumière (221, 222) d'un deuxième groupe commun de déviation de lumière (221, 222) sont disposés respectivement dans un plan commun qui s'étend notamment de manière sensiblement parallèle par rapport à une direction principale de propagation (A) de la lumière injectée dans le premier guide de lumière (2).

11. Composant (1) selon l'une des revendications 9 ou 10, dans lequel plusieurs deuxièmes groupes de déviation de lumière (241, 242) sont présents, et dans lequel les deuxièmes éléments de déviation de lumière (221, 222) de différents deuxièmes groupes de déviation de lumière (221, 222) dévient la lumière injectée dans le premier guide de lumière (2) d'angles de déviation respectivement différents.

12. Composant (1) selon l'une des revendications 9 à 11, dans lequel chacun des deuxièmes groupes de déviation de lumière (241, 242) est respectivement associé à l'un des premiers groupes de déviation de lumière (231, 232), de sorte que la lumière injectée dans le premier guide de lumière (2) est déviée par chacun des deuxièmes groupes de déviation de lumière (241, 242) respectivement en direction de l'un des premiers groupes de déviation de lumière (231, 232).

13. Composant (1) selon l'une des revendications précédentes, dans lequel un premier élément de déviation de lumière respectif (211, 212, 213, 214, 215) présente une section transversale en forme de cercle avec un centre, ou dans lequel un cercle circonscrit ayant un centre (ML) peut être tracé autour de la section transversale d'un premier élément de déviation de lumière respectif (211, 212, 213, 214, 215), et dans lequel le centre du cercle ou du cercle circonscrit d'un premier élément de déviation de lumière respectif (211, 212, 213, 214, 215) présente, par rapport au centre du cercle ou du cercle circonscrit de tous les autres premiers éléments de déviation de lumière (211, 212, 213, 214, 215), une distance (AML) qui est inférieure au diamètre du cercle ou du cercle circonscrit du premier élément de déviation de lumière respectif (211, 212, 213, 214, 215) divisée par la valeur 0.33, le premier élément de déviation de lumière respectif (211, 212, 213, 214, 215) ainsi que tous les autres premiers éléments de déviation de lumière (211, 212, 213, 214, 215) appartenant de préférence à un premier groupe commun de déviation de lumière respectif (231, 232, 233, 234, 235), tous les premiers éléments de déviation de lumière (211, 212, 213, 214, 215) du premier groupe commun de déviation de lumière (231, 232, 233, 234, 235) étant de préférence disposés dans un plan commun.

14. Composant (1) selon l'une des revendications précédentes, dans lequel un élément de diffusion respectif (311, 312, 313, 314, 315) présente une section transversale en forme de cercle avec un centre, ou dans lequel un cercle circonscrit ayant un centre (ML) peut être tracé autour de la section transversale d'un élément de diffusion respectif (311, 312, 313, 314, 315), et dans lequel le centre du cercle ou du cercle circonscrit d'un élément de diffusion respectif (311, 312, 313, 314, 315) présente par rapport au centre du cercle ou du cercle circonscrit de tous les autres éléments de diffusion (311, 312, 313, 314, 315) une distance qui est supérieure au diamètre du cercle ou du cercle circonscrit de l'élément de diffusion respectif (311, 312, 313, 314, 315) divisé par la valeur 0.33, l'élément de diffusion respectif (311, 312, 313, 314, 315) ainsi que tous les autres éléments de diffusion (311, 312, 313, 314, 315) appartenant à un groupe d'éléments de diffusion commun respectif (321, 322, 323, 324, 325), tous les éléments de diffusion (311, 312, 313, 314, 315) du groupe d'éléments de diffusion commun respectif (321, 322, 323, 324, 325) étant de préférence disposés dans un plan commun.

15. Composant (1) selon l'une des revendications précédentes, comprenant en outre au moins une source lumineuse (5), de préférence exactement une source lumineuse (5), pour injecter la lumière dans le premier guide de lumière (2).
